(19) Europäisches Patentamt
European Patent Office
Office européen des brevets

(11) **EP 1 532 726 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **04764473.7**

(22) Anmeldetag: **25.08.2004**

(51) Int Cl.:
***H02M 3/156*** *(2006.01)*

(86) Internationale Anmeldenummer:
**PCT/EP2004/009497**

(87) Internationale Veröffentlichungsnummer:
**WO 2005/022736 (10.03.2005 Gazette 2005/10)**

(54) **SCHALTREGLER**

SWITCHING CONTROLLER

REGULATEUR A DECOUPAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.08.2003 DE 10339483**
**29.01.2004 DE 102004004542**

(43) Veröffentlichungstag der Anmeldung:
**25.05.2005 Patentblatt 2005/21**

(73) Patentinhaber: **Fraunhofer-Gesellschaft zur Förderung der angewandten Forschung e.V. 80686 München (DE)**

(72) Erfinder:
• **HACKNER, Michael**
**92331 Parsberg (DE)**
• **ERNST, Roland**
**91052 Erlangen (DE)**
• **HOHE, Hans-Peter**
**91332 Heiligenstadt (DE)**

(74) Vertreter: **Zinkler, Franz et al Patentanwälte Schoppe, Zimmermann, Stöckeler & Zinkler, Postfach 246 82043 Pullach bei München (DE)**

(56) Entgegenhaltungen:
**DE-A- 3 925 625     DE-A- 19 700 100**
**US-A- 5 402 056     US-A- 5 583 422**

EP 1 532 726 B1

EP 1 532 726 B1

**Beschreibung**

Die vorliegende Erfindung bezieht sich auf Schaltregler und insbesondere auf Schaltregler mit einem Netzwerk aus einer Spule, einem Kondensator und einer Diode, die ringartig verschaltet sind.

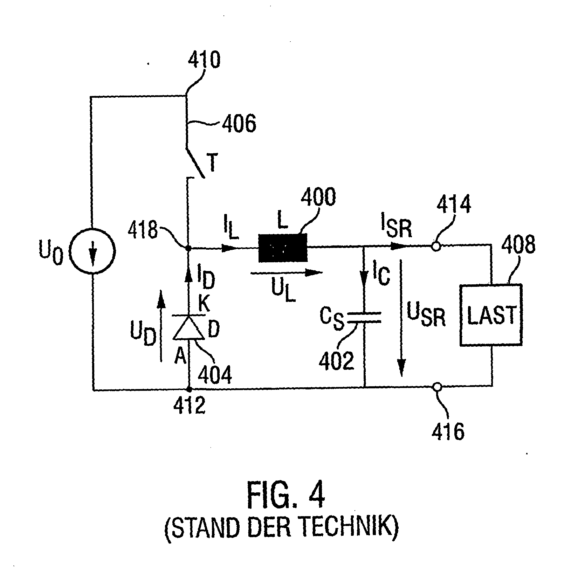

Fig. 4 zeigt einen bekannten Abwärts-Wandler mit einem einfachen Schalter, wie er beispielsweise in "Halbleiterschaltungstechnik" U. Tietze, C.H. Schenk, Springer-Verlag, 9. Auflage, 1989, Abbildung 18.37 auf Seite 564 gezeigt ist. Der Abwärts-Wandler in Fig. 4 umfasst eine ringartige Verschaltung mit einer Spule 400, einem Kondensator 402 und einer Diode 404. Der Abwärts-Wandler bzw. Schaltregler in Fig. 4 umfasst ferner einen Ladeschalter 406 sowie eine in Fig. 4 nicht gezeigte Steuerung, die ausgebildet ist, um den Ladeschalter 406 so zu steuern, dass die Ausgangsspannung des Schaltreglers, die in Fig. 4 mit $U_{SR}$ bezeichnet ist, auf einem definierten Niveau zu halten bzw. in einem Bereich um das definierte Niveau herum zu halten.

Die in Fig. 4 gezeigte Schaltung umfasst eine bestimmte Anzahl von Knoten, die nachfolgend dargelegt werden. An einem ersten Eingangsknoten 410 der Schaltung wird ein Pol einer Eingangsspannungsquelle $U_0$ angeschlossen, während an einem zweiten Eingangsknoten 412 ein anderes Potential der Eingangsquelle $U_0$ angeschlossen wird. Der zweite Eingangsknoten 412 ist typischerweise der Masseknoten. Ein erster Ausgangsknoten 414 wird auch als erste Ausgangsschiene oder positive Ausgangsschiene bezeichnet, während ein zweiter Ausgangsknoten 416 auch als zweite Ausgangsschiene bzw. negative Ausgangsschiene bezeichnet wird, wenn die in Fig. 4 gezeigte Konvention für die Ausgangsspannung des Schaltreglers $U_{SR}$ verwendet wird. Der Schalter 406 ist einerseits zwischen den ersten Eingangsknoten 410 und einen ersten Zwischenknoten 418 geschaltet. Ferner ist die Diode 404 so zwischen den ersten Zwischenknoten 418 und den zweiten Eingangsknoten 412 geschaltet, dass die Anode der Diode mit dem zweiten Eingangsknoten 412 verbunden ist, während die Kathode der Diode mit dem ersten Zwischenknoten 418 verbunden ist. Ferner ist, wie es in Fig. 4 gezeigt ist, der Kondensator 402 zwischen den ersten Ausgangsknoten 414 und den zweiten Ausgangsknoten 416 geschaltet. Gemäß der in Fig. 4 gezeigten Konfiguration des Netzwerkes aus Diode, Spule und Kondensator ist die Spule zwischen den ersten Zwischenknoten 418 und den ersten Ausgangsknoten 414 geschaltet.

Nachfolgend wird auf die Funktionalität der in Fig. 4 gezeigten Schaltung eingegangen. So lange der Schalter 406 geschlossen ist, wird $U_D$ gleich der negativen Eingangsspannung $U_0$. Wenn er sich öffnet, behält der Drosselstrom $I_L$ seine Richtung bei, und $U_D$ sinkt betragsmäßig ab, bis die Diode leitend wird, also ungefähr auf 0-Potential. Der zeitliche Verlauf des Spulenstroms ergibt sich aus dem Induktionsgesetz, gemäß dem die Spannung an der Spule gleich dem Produkt aus der Induktivität L der Spule und der Ableitung des Spulenstroms nach der Zeit ist. Während der Einschaltzeit, also wenn die Eingangsspannung $U_0$ an der Diode 404 anliegt, liegt an der Drossel die Spannung $U_0$ - $U_{SR}$ an. Während der Ausschaltzeit $t_{aus}$ des Schalters 406 liegt an der Drossel die Spannung $U_L = -U_{SR}$ an. Daraus ergibt sich eine betragsmäßige Stromänderung $\Delta I_L$, die folgendermaßen gegeben ist:

$$\Delta I_L = 1/L \cdot (-U_{SR}) \cdot \Delta t_{aus} = 1/L \ (U_0 - U_{SR}) \ t_{ein}.$$

Aus dieser Bilanz lässt sich wiederum die Ausgangsspannung berechnen, die folgendermaßen definiert ist:

$$U_{SR} = [t_{ein}/(t_{ein} + t_{aus})] \cdot U_0 = t_{ein}/T \cdot U_0 = p \cdot U_0.$$

In der vorstehenden Gleichung ist $T = t_{ein} + t_{aus} = 1/F$ die Schwingungsdauer, und $p = t_{ein}/T$ ist das sogenannte Tastverhältnis. Es ist zu sehen, dass sich als Ausgangsspannung erwartungsgemäß der arithmetische Mittelwert von $U_D$ ergibt. Typischerweise wird die Induktivität L der Spule 400 so gewählt, dass ein Minimalstrom nicht unterschritten wird, wie es in der Technik bekannt ist. Ferner ist bekannt, dass mit Erhöhung der Taktfrequenz die Induktivität verkleinert werden kann. Ferner steigt bei zu hohen Frequenzen der Aufwand für den Schalttransistor und die Ansteuerschaltung. Außerdem nehmen dynamische Schaltverluste proportional zur Frequenz zu.

Der Kondensator 402 und die Drossel 400 bestimmen die Welligkeit der Ausgangsspannung. Die Erzeugung des Schaltsignals zum Schalten des Lade-Transistors 406 erfolgt üblicherweise durch einen Impulsbreitenmodulator und einen Regler mit Spannungsreferenz. Im einzelnen wird eine Referenzspannung, die einen Sollwert liefert, einem Subtrahierer zugeführt, dem auch die aktuelle Ausgangsspannung $U_{SR}$ als Ist-Wert zugeführt wird. Das Ausgangssignal des Subtrahierers wird einem Regelverstärker zugeführt, der einen Komparator speist, in den andererseits ein von einem Sägezahngenerator erzeugtes Signal zugeführt wird. Das Ausgangssignal des Komparators ist das Steuersignal für den Schalter 406 in Fig. 4. Typischerweise ist der Regelverstärker ein PI-Regelverstärker. Er erhöht sein Ausgangssignal so lange, bis die Differenz am Ausgang des Subtrahierers zu 0 wird, bis also die Ausgangsspannung $U_{SR}$ gleich der Soll-Ausgangsspannung ist. Typische Größenordnungen für die Dimensionierung der Spule sind im Milli-Henry-Bereich (z. B. 2,7 mH), während typische Werte für Kondensatoren im dreistelligen Mikro-Farad-Bereich (z. B. 100 $\mu$F) liegen, wenn Schaltfrequenzen im Bereich von 50 kHz verwendet werden.

In Fig. 4 gezeigte Schaltregler sollen eine geeignete Spannungsversorgung an eine nachfolgend angeschlossene Schaltung, wie beispielsweise einen ASIC, liefern. Die Spannungsversorgung besteht in der Regel aus einer oder mehreren konstanten Gleichspannungen von beispielsweise +5 V oder $\pm$15 V. Oft steht diese nicht von vorneherein in der gewünschten Form zur Verfügung und muss erst durch beispielsweise einen in Fig. 4 gezeigten Schaltregler, der durch einen nachgeschalteten Linearregler ergänzt werden kann, um die Welligkeit der Ausgangsspannung zu beseitigen, erzeugt werden. Eingangsseitig an dem in Fig. 4 gezeigten Schaltregler liegt üblicherweise ein Gleichrichter vor, der aus dem Wechsel- bzw. Drehstromnetz (230 V bzw. 400 V) der E-lektrizitätswerke die Eingangsspannung $U_0$ erzeugt.

So existieren abweichend von dem in Fig. 4 gezeigten Schaltregler auch andere Regler mit einem Transformator, einem Gleichrichter, einem Glättungs-Kondensator und eventuell einem Linearregler zur Spannungs-Stabilisierung. Allerdings ist der Transformator aufwendig herzustellen und damit teuer. Ferner benötigt er viel Platz. Ein weiterer Nachteil des Transformators besteht in seinem frequenzabhängigen Arbeitsbereich. Dieser ist z. B. auf die Netzfrequenz von 50 Hz bzw. 60 Hz eingeschränkt. Weicht die Frequenz ab, dann hat dies auch eine Abweichung der Ausgangsspannung des Transformators zur Folge. Bei einer Gleichspannung am Eingang funktioniert die Spannungs-Übertragung nicht.

Läßt man den Transformator weg und verwendet nur Gleichrichter, Glättungskondensator und einen Linearregler, dann geht viel Energie in Form von Wärme verloren. Außerdem muss dann für eine ausreichende Kühlung des Linearreglers gesorgt werden, die wiederum sehr aufwendig ist und Platz braucht. Dies alles wird dadurch umgangen, wenn man, wie es anhand von Fig. 4 dargestellt worden ist, anstelle des Linearreglers einen Schaltregler verwendet. Durch den deutlich besseren Wirkungsgrad geht wenig Energie in Form von Wärme verloren und folglich ist der Aufwand für die Kühlung deutlich geringer. Der Schaltregler benötigt, wie es ausgeführt worden ist, eine Drossel (die Induktivität 400 in Fig. 4), die relativ aufwendig in der Herstellung ist. Diese hat jedoch nur eine Wicklung und ist damit einfacher herzustellen als ein Transformator, der zwei Wicklungen besitzt. Außerdem kann die Drossel durch Wahl einer höheren Arbeits-Frequenz verkleinert werden, was auch bei Transformatoren funktioniert.

Viele bekannte Schalt-Netzteile, so auch das in Fig. 4 gezeigte Schaltnetzteil sind in bestimmter Hinsicht problematisch. Üblicherweise ist der Eingangsspannungs-Bereich auf ein Verhältnis von $U_{E,max}/U_{E,min} \leq 5$ beschränkt, was aus den Katalogen verschiedener Hersteller zu sehen ist. Dieser Bereich ist für manche Anwendungen zu gering und sollte erhöht werden, und zwar auf ein Verhältnis von z. B. 20:1.

Die Spannungsversorgung des Reglers selbst erfolgt entweder über eine separate Spannungsquelle oder wird aus der Eingangsspannung erzeugt, was einen zusätzlichen Spannungsregler und damit zusätzlichen Aufwand bedeutet.

Ferner wird für einen flexiblen Einsatz angestrebt, die Eingangsspannung deutlich größer wählen zu können, als die maximale zulässige Betriebsspannung des Reglers selbst, ohne dass zusätzliche Spannungs-Regler für die Erzeugung dieser Betriebsspannung verwendet werden.

Außerdem sollte bei Anlegen der Eingangsspannung ein möglichst schnelles, kontrolliertes Anlaufen des Schaltreglers gewährleistet sein. Insbesondere für zeitkritische Anwendungen sollte diese sogenannte Anlauf-Verzögerung so klein als möglich sein.

Insbesondere nachteilig an dem in Fig. 4 gezeigten Schaltreglerkonzept ist, dass das Signal zum Steuern des Schalters 406 extern erzeugt werden muss. So wird einerseits das Timing des Signals durch Regelung der Ausgangsspannung $U_{SR}$ durch einen fremd-versorgten Regler ermittelt. Des weiteren wird das dann tatsächlich an den Schalter, der beispielsweise ein Transistor sein kann, angelegte Signal, im Falle eines Transistors wird dies die Gate-Spannung des Transistors sein, wiederum extern in dem Schaltregler erzeugt, was wiederum einen Spannungs-Umsetzer zur Folge hat, um an den Schalter ein Steuersignal mit dem richtigen Potential anzulegen. Wie es ausgeführt worden ist, wird das direkt an den Schalter 406 angelegte Signal somit entweder extern bereitgestellt oder aus der Eingangsspannung $U_0$ erzeugt.

Die DE 199 46 025, die DE 197 00 100 C2, die DE 195 07 553 A1 oder die DE 197 06 491 A1 offenbaren Schaltregler, die auf der Basis des in Fig. 4 gezeigten Prinzipschaltbilds arbeiten, wobei je nach Ausführungsform die Spule 400 entweder zwischen dem ersten Zwischenknoten 418 und dem ersten Ausgangsknoten 414, wie in Fig. 4 gezeigt, angeordnet ist, oder alternativ zwischen dem zweiten Eingangsknoten 412 und dem zweiten Ausgangsknoten 416 angeordnet ist. Die Steuerspannung für den Schalter 406, der als Transistor ausgeführt sein kann, wird von dem Regler, der das Timing des Schalters 406 bestimmt, oder extern erzeugt. Dies führt zu zusätzlichem Schaltungsaufwand, der im Hinblick auf den Entwurf, das Testen und die Herstellung zusätzliche Kosten bedeutet. Zusätzliche Kosten sind insbesondere deswegen nachteilhaft, da Schaltregler insbesondere, wenn sie innerhalb von Leuchten vorgesehen sind oder aber auch voll integriert mit einer zu versorgenden integrierten Schaltung ausgeführt sind, den Preis des Endprodukts erhöhen und insbesondere bei Chipanwendungen, bei denen die Chipfläche ein Kriterium ist, aufgrund des erhöhten Chipflächen-Verbrauchs entstehen.

Die DE 3925625 A1 offenbart eine getaktete Konstantleistungsquelle mit hohem Wirkungsgrad und großem Eingangsspannungsbereich, die einen Schaltregler mit einem elektronischen Schalter, einem nachgeschalteten LC-Siebglied mit Speicherdrossel und eine den elektronischen Schalter steuernde Steuereinheit aufweist. Die Steuereinheit hat zwei Komparatoren mit jeweils einem unteren und einem oberen vorgegebenen Schwellenwert und einen mit den Ausgängen der Komparatoren verbundenen bistabilen Schalter. Ein Kondensator ist mit den Komparatoren so verbunden, dass er sich über einen ersten an der Eingangsspannung liegenden Widerstand auflädt und über einen zweiten Widerstand entlädt, wobei die Dimensionierung des zweiten Widerstands so gewählt ist, dass sich während der Entladezeit des Kondensators ein lückender Betrieb der Speicherdrossel ergibt.

Das US-Patent Nr. 5,402,056 offenbart eine Leistungsversorgung für ein mobiles Funkgerät, bei dem ein Schalter, dessen Eingang über eine Diode auf Masse gelegt ist, mit einer Schwingschaltung verbunden ist. Der Ausgang des Schalters ist mit einer Serieninduktivität verbunden, die mit einer Parallelkapazität verbunden ist, deren Ausgang das Ausgangssignal des Schaltreglers liefert, wobei der Ausgang über einen weiteren Schalter mit einer inneren Speicherbatterie verbunden ist.

Das US-Patent Nr. 5,583,422 offenbart ein Schaltsteuersystem, das eine konstante Ausgangsspannung über einen breiten Eingangsspannungsbereich liefert. Die Eingangsspannung kann niedriger oder höher als die Ausgangsspannung sein. Dies wird durch eine Kombination eines Abwärtswandlers und eines Aufwärtswandlers erreicht, wobei eine Speicherspule als Flachspule in Mehrschichttechnologie konfiguriert ist und einen Spulenkern aufweist.

Die Aufgabe der vorliegenden Erfindung besteht darin, ein Schaltreglerkonzept zu schaffen, das in der Herstellung preisgünstiger ist.

Diese Aufgabe wird durch einen Schaltregler nach Patentanspruch 1 oder ein Verfahren zum Steuern eines Hochfahrens eines Schaltreglers nach Patentanspruch 18 gelöst.

Der vorliegenden Erfindung liegt die Erkenntnis zugrunde, dass das Signal zum Ansteuern des Schalters aus dem Ausgangssignal des Schaltreglers, also dem von dem Schaltregler erzeugten Nutzsignal abgeleitet wird. Hierzu wird erfindungsgemäß das Potential an einer Ausgangsschiene abgegriffen und entweder direkt oder beaufschlagt mit einem Spannungsabfall an den Schalter geliefert, um den Schalter beispielsweise zu schließen. Soll der Schalter geöffnet werden, so gelingt dies dadurch, dass das Potential an der anderen Ausgangsschiene, also beispielsweise der negativen Ausgangsschiene, entweder direkt oder mit einem Spannungsabfall beaufschlagt an den Steuereingang des Schalters angelegt wird. Das Umschalten von einer Ausgangsschiene zu der anderen Ausgangsschiene erfolgt erfindungsgemäß durch einen Umschalter mit einem Steuereingang, der durch das Timing-Signal der Steuerung zum Ermitteln der Öffnungs- und Schließzeiten des Ladeschalters angesteuert wird.

Die vorliegende Erfindung ist dahingehend vorteilhaft, dass die Steuerung, die das Schalter-Timing bestimmt, keine spezielle Spannung mit einem bestimmten Spannungswert erzeugen muss, um den Schalter einerseits zu öffnen oder andererseits zu schließen. Ferner muss kein solches Potential extern erzeugt werden. Erfindungsgemäß wird statt dessen auf die ohnehin im Schaltregler vorhandenen Potentiale auf der ersten und der zweiten Ausgangsschiene zurückgegriffen, um mit dem einen Potential, das sich um die zu regelnde Ausgangsspannung von dem Potential an der anderen Ausgangsschiene unterscheidet, den Schalter entweder zu öffnen oder zu schließen. Nachdem der Potentialunterschied dieser beiden Potentiale typischerweise groß genug ist, muss insbesondere dann, wenn als Schalter ein Transistor verwendet wird, keine besonders aufwendige Dimensionierung des Transistors betrieben werden, da es ausreichend ist, wenn der Transistor derart ausgestaltet ist, dass er mit dem einen Potential an seinem Steuereingang schließt und mit dem anderen Potential an seinem Steuereingang geöffnet ist. Nachdem, wie es ausgeführt worden ist, der Potentialunterschied zwischen den Potentialen an den beiden Ausgangsschienen typischerweise im Bereich von einigen Volt liegen wird, muss ein Transistorschalter nicht extra dimensioniert werden, da sehr viele Transistoren existieren, die bei dem einen Potential am Steuereingang leiten und beim anderen Potential am Steuereingang sperren.

Ein weiterer Vorteil der vorliegenden Erfindung besteht darin, dass keine externe Schaltung, die wieder einen Stromverbrauch nach sich zieht, benötigt wird, da die Energie zum Steuern des Schalters direkt aus der Schaltregler-Ausgangsspannung gezogen wird. Im Vergleich zu dem bekannten Fall, bei dem die Energie zum Steuern des Schalters aus der Eingangsspannung gezogen wird, ist die erfindungsgemäße Variante dahingehend vorteilhaft, dass die Schaltregler-Ausgangsspannung nahezu immer kleiner als die Eingangsspannung ist, wobei kleinere Spannungen insgesamt mit preisgünstigeren Elementen gehandhabt werden können als größere Spannungen, was insbesondere für den Umschalter zwischen der einen und der anderen Ausgangsschiene zutrifft.

Die vorliegende Erfindung ist ferner dahingehend vorteilhaft, dass sie das innere Konzept des Schaltreglers, also das Zusammenwirken der Diode, der Spule und des Ladekondensators bzw. Siebkondensators nicht dahingehend beeinflusst, dass die Funktionalität abgeändert werden müsste, um ein bekanntes Schaltreglerprinzip mit dem erfindungsgemäßen Umschalter auszustatten. Statt dessen ist das erfindungsgemäße Konzept zum Erzeugen des Schaltsignals für den Ladeschalter mit bekannten Schaltreglerkonzepten kompatibel, was wiederum Zeit und Kosten spart, da auf bekannte Konzepte zurückgegriffen werden kann.

Ein weiterer Vorteil der vorliegenden Erfindung besteht darin, dass das erfindungsgemäße Konzept mit einer selbstversorgten Steuerung kombinierbar ist, da es keine eigene Versorgung benötigt. So ist es beim Hochfahren des Schaltreglers, also wenn die Eingangsspannung eingeschaltet wird, zunächst für den Hochlaufvorgang selbst bis zu einer gewissen Schwelle, die von dem Ladeschalter bestimmt wird, unerheblich in welcher Stellung der Umschalter ist. Der erfindungsgemäße Schaltregler wird immer hochlaufen, unabhängig davon, ob der Umschalter zum Zeitpunkt des Anlegens der Eingangsspannung mit der positiven oder der negativen Ausgangsschiene verbunden ist. Damit müssen für das Hochfahren bezüglich des Umschalters zum Anlegen des Potentials einer Ausgangsschiene an den Steuereingang des Schalters keine Maßnahmen getroffen werden. Statt dessen läuft der erfindungsgemäße Schaltregler immer definiert hoch.

Ein weiterer Vorteil, der aufgrund der sicheren Hochfahrbarkeit entsteht, ist darin zu sehen, dass ein schnelles Hochfahren gewährleistet wird, zumal keine Zeitverzögerung beispielsweise dadurch auftritt, dass der Umschalter vor dem Hochfahren bzw. unmittelbar zum Zeitpunkt des Hochfahrens in einen bestimmten Zustand gebracht werden muss.

Insbesondere in der Variante, bei der die Spule mit der Anode der Diode verbunden ist, ist die vorliegende Erfindung auch dahingehend vorteilhaft, dass die Eingangsspannung der Schaltung nur durch die Spannungs-Festigkeit der drei Elemente Schalter, Freilauf-Diode und Spule begrenzt ist. Ferner versorgt sich der Schaltregler selbst und läuft definiert hoch, wie es ausgeführt worden ist.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Prinzipblockschaltbild des erfindungsgemäßen Schaltreglers;

Fig. 2a    ein bevorzugtes Ausführungsbeispiel des erfindungsgemäßen Schaltreglers mit einem selbstsperrenden Transistor als Ladeschalter;

Fig. 2b    Alternativen für den Vorwiderstand, um den Spannungsabfall vor der Zenerdiode zu erzeugen;

Fig. 3a    ein alternatives bevorzugtes Ausführungsbeispiel der vorliegenden Erfindung mit einem selbstleitenden Transistor als Ladeschalter;

Fig. 3b    ein alternatives Ausführungsbeispiel mit einem PMOS-Transistor als Schalter; und

Fig. 4    ein Blockschaltbild eines bekannten Schaltreglers, der auch als Buck-Converter bekannt ist.

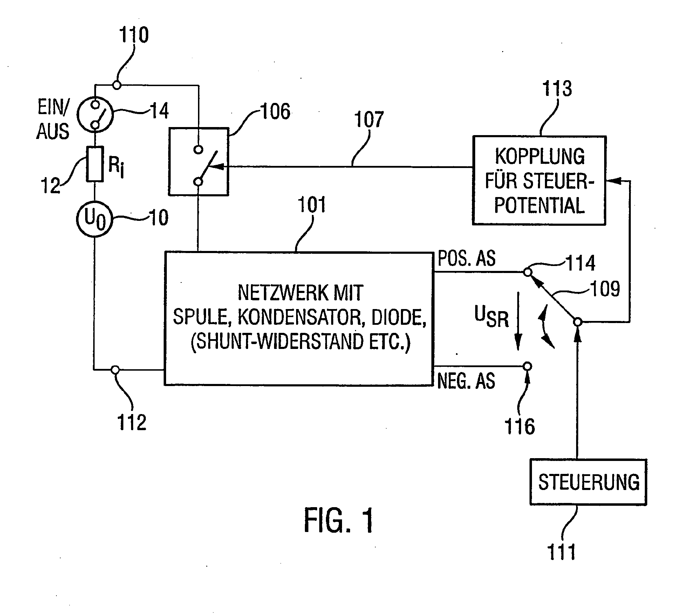

Fig. 1 zeigt einen erfindungsgemäßen Schaltregler zum Erzeugen einer geregelten Ausgangsspannung $U_{SR}$ unter Verwendung einer Eingangsspannung $U_0$, die aus Übersichtlichkeitsgründen als Spannungsquelle $U_0$ 10, die in Serie zu einem Innenwiderstand $R_i$ 12 geschaltet ist, gezeigt ist. Wenn ein Ein/Aus-Schalter 14 betätigt wird, liegt zwischen einem erersten Eingangsknoten 110 und einem zweiten Eingangsknoten 112 eine Spannung an. Zwischen den ersten Eingangsknoten 110 und den zweiten Eingangsknoten 112 sind gewissermaßen seriell zueinander ein steuerbarer Schalter 106 und ein Netzwerk 101 geschaltet, das ein typisches Schaltregler-Netzwerk mit einer Spule, einem Kondensator und einer Diode ist. Typischerweise haben solche Schaltregler-Netzwerke 101 auch noch einen Shunt-Widerstand, um einen Strompfad mit einem definierten Ohmschen Widerstand zu schaffen.

Die Ausgangsspannung, die von dem in Fig. 1 gezeigten erfindungsgemäßen Schaltregler geregelt wird, liegt zwischen einer ersten Ausgangsschiene, die auch als positive Ausgangsschiene bezeichnet wird und mit dem ersten Ausgangsknoten 114 identisch ist, und einer zweiten Ausgangsschiene, die auch als negative Ausgangsschiene bezeichnet wird und mit dem zweiten Ausgangsknoten 116 identisch ist, an. Bei dem in Fig. 1 gezeigten Ausführungsbeispiel ist die positive Ausgangsschiene 114 auf ein erstes (positives) Potential bringbar, während die negative Ausgangsschiene 116 auf ein zweites Potential bringbar ist, das kleiner als das erste Potential ist.

Das Netzwerk 101, das eine Spule, einen Kondensator und eine Diode aufweist, hat die Diode insbesondere so geschaltet, dass sie mit der positiven Ausgangsschiene gekoppelt ist, wenn die Spule mit der negativen Ausgangsschiene gekoppelt ist, oder dass sie mit der negativen Ausgangsschiene gekoppelt ist, wenn die Spule mit der positiven Ausgangsschiene gekoppelt ist. Typischerweise wird die Diode also mit einer Ausgangsschiene, entweder der positiven Ausgangsschiene 114 oder der negativen Ausgangsschiene 116, gekoppelt sein.

Der Schalter 106, der in Fig. 1 gezeigt ist, wird auch als Ladeschalter bezeichnet, da er zum Laden des Kondensators in dem Netzwerk 101 vorgesehen ist. Insbesondere ist er in Serie zu der Diode geschaltet. Der Ladeschalter umfasst ferner einen Steuereingang 107, über den der Ladeschalter 106 geschlossen werden kann, was bedeutet, dass die Eingangsspannung nicht an dem Ladeschalter abfällt, sondern an dem Netzwerk 101. Ist der Schalter dagegen geöffnet, so fällt die Eingangsspannung über dem Schalter ab, das Netzwerk 101 ist somit (abgesehen von transienten Zuständen) nicht mit der Eingangsspannung beaufschlagt.

Über den Steuereingang 107 kann der Ladeschalter somit geöffnet oder geschlossen werden. Das Netzwerk 101 umfasst ferner einen Kondensator, der auch als Siebkondensator bezeichnet wird und derart geschaltet ist, dass an dem Kondensator die geregelte Ausgangsspannung abgreifbar ist. Ein wesentlicher Teil des Netzwerks 101 ist ferner die Induktivität, die nachfolgend auch als Spule bezeichnet wird, welche einerseits mit der Diode und andererseits mit dem Kondensator gekoppelt ist.

Erfindungsgemäß umfasst der in Fig. 1 gezeigte Schaltregler ferner eine Umschalteinrichtung 109, die steuerbar ist, um abhängig von einem Umschaltsteuersignal, das von einer Steuerung 111 bereitgestellt wird, entweder die erste Ausgangsschiene 114 oder die zweite Ausgangsschiene 116 über eine Kopplungseinrichtung 113 mit dem Steuereingang 107 des Ladeschalters zu koppeln. Insbesondere ist der Ladeschalter 106 derart ausgebildet, dass er aufgrund eines Potentials an einer Ausgangsschiene geschlossen ist, und aufgrund eines Potentials an der anderen Ausgangsschiene geöffnet ist.

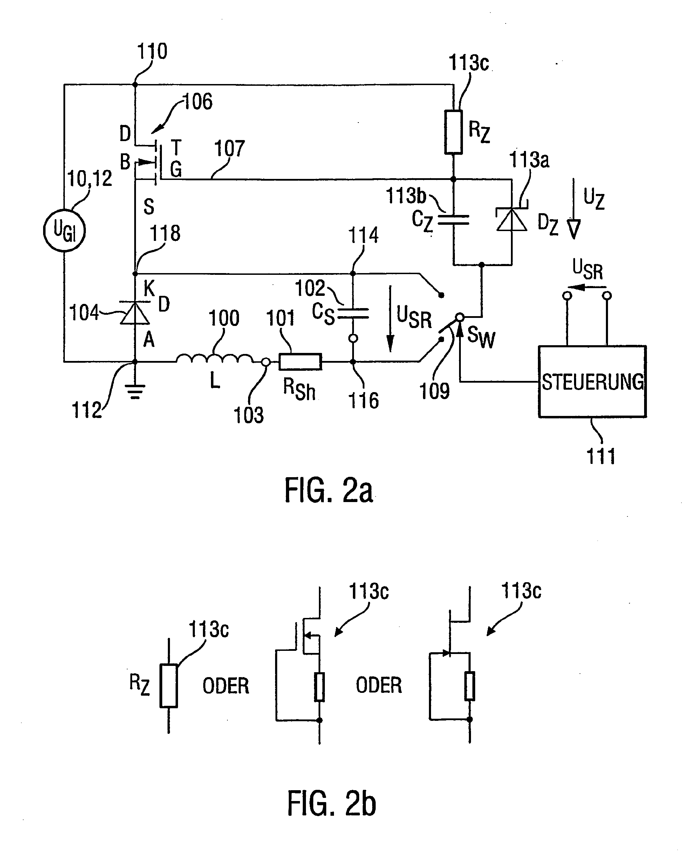

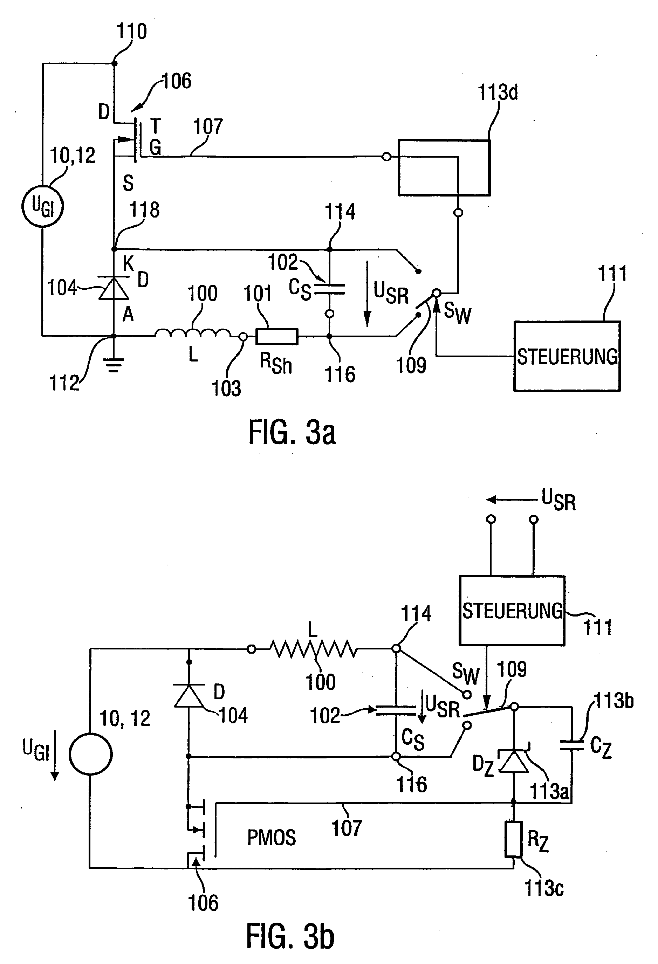

Bei nachfolgend dargelegten Ausführungsbeispielen ist der Ladeschalter 106, wie später noch anhand der Fig. 2a und 3a dargestellt ist, als selbstleitender oder selbstsperrender NMOS-Transistor ausgeführt. In diesem Fall wird der Ladeschalter 106 durch das Potential an der positiven Ausgangsschiene geschlossen (leitend gemacht), während er durch das Potential an der negativen Ausgangsschiene geöffnet wird (in den Leerlauf gebracht wird).

Wenn der Schalter 106 als PMOS-Transistor ausgeführt ist, werden die Spule 100 und gegebenenfalls der Shunt-Widerstand 101 zwischen die Knoten 118 und 114 geschaltet werden und die Knoten 112 und 116 kurzgeschlossen werden. und dass das Potential an der negativen Ausgangsschiene dafür verwendet wird, um den Schalter zu öffnen, während das Potential an der positiven Ausgangsschiene 114 verwendet wird, um den Schalter 106 zu schließen, also in den Leerlaufbetrieb zu bringen. Eine entsprechende Schaltung ist in Fig. 3b gezeigt.

Üblicherweise wird die Steuerung 111 einen Regler umfassen, der beliebig ausgestaltet sein kann, so lange er ein Signal ausgibt, das dazu führt, dass durch Öffnen und Schließen des Ladeschalters 106 die Ausgangsspannung $U_{SR}$ einen definierten erwünschten Zeitverlauf hat. Üblicherweise wird der Regler 111 derart arbeiten, dass er eine Ausgangsspannung mit einem Mittelwert am Ausgang 114, 116 des Netzwerks 101 sicherstellt, unabhängig davon, welche Last angeschaltet ist bzw. welchen Strom eine Last zieht. Der Zeitverlauf der Spannung $U_{SR}$ wird typischerweise ein Spannungsverlauf mit einer gewissen Welligkeit um einen Mittelwert herum sein. Die Welligkeit kann durch Dimensionierung von Spule und Kondensator in vorbestimmte Toleranzbereiche gebracht werden, wobei in vielen Fällen ein Signal mit einer Welligkeit um einen Mittelwert herum bereits ausreichend ist, und zwar insbesondere dann, wenn die Anforderungen an das Schaltregler-Ausgangssignal, also die Spannung $U_{SR}$, nicht so hoch sind, wie beispielsweise für eine Lampe oder etwas ähnliches. Andererseits wird in dem Fall, in dem der Schaltregler, wie er in Fig. 1 gezeigt ist, zusammen mit einer von ihm zu versorgenden integrierten Schaltung auf einem Substrat integriert ist, derselbe noch durch einen dem Ausgang 114, 116 des Schaltreglers nachgeschalteten Linearregler ergänzt sein, um Anforderungen an eine Spannung $U_{SR}$ zu erfüllen, die die Möglichkeiten des in Fig. 1 gezeigten Schaltreglers übersteigen, um mit vernünftigem Aufwand ein Ausgangssignal $U_{SR}$ mit entsprechender Spezifikation zu liefern.

Die Einschalt/Ausschalt-Steuerung wird derart vorgenommen, dass dann, wenn die Steuerung 111 bestimmt, dass der Ladeschalter geöffnet werden soll, der Umschalter 109 an die dem Öffnen des Ladeschalters 106 zugeordnete Ausgangsschiene, in Fig. 1 beispielsweise 116, verbunden wird, während dann, wenn der Ladeschalter 106 geschlossen werden soll, weil der Kondensator im Netzwerk 101 wieder nachgeladen werden soll, die Steuerung 111 den Umschalter 109 aktiviert, um nunmehr das Potential der oberen Ausgangsschiene 114 an den Steuereingang 107 des Ladeschalters 106 zu koppeln.

Fig. 2a zeigt ein bevorzugtes Ausführungsbeispiel der vorliegenden Erfindung, bei dem die Spule 100 mit der Diode 104 und dem Siebkondensator 102 verschaltet ist. Beim Vergleich von Fig. 2a und Fig. 4 wird ersichtlich, dass die Spule 100 nicht mehr, wie in Fig. 4, mit der Kathode der Diode 104 verbunden ist, sondern mit der Anode der Diode 104 verbunden ist. Ferner wird aus dem Vergleich von Fig. 2a und Fig. 4 ersichtlich, dass nunmehr die positive Ausgangsschiene 114 mit einem Zwischenknoten 118, über den der Ladeschalter 106 mit der Diode 104 verbunden ist, mit dem Ausgangsknoten 114, also der ersten Ausgangsschiene, zusammenfällt. Ferner ist in Fig. 2a ein Shunt-Widerstand $R_{Sh}$ 101 eingezeichnet, der zwischen die Spule 100 und die negative Ausgangsschiene 116 geschaltet ist. Ein Knoten 103 zwischen dem Shunt-Widerstand 101 und der Spule 100 wird auch als unterer Zwischenknoten bezeichnet.

Insbesondere ist der Ladeschalter 106 bei dem in Fig. 2a gezeigten Ausführungsbeispiel als selbstsperrender NMOS-Transistor ausgeführt, dessen Drain D mit dem ersten Eingangsknoten 110 verbunden ist, und dessen Source S zunächst mit einem Bulk-Anschluß B des Transistors kurzgeschlossen ist, und dessen Source S ferner direkt mit dem positiven Ausgangsknoten 114, also der positiven Ausgangsschiene gekoppelt ist. Die Kopplungseinrichtung 113 von Fig. 1 umfasst bei dem in Fig. 2a gezeigten Ausführungsbeispiel eine Zener-Diode $D_Z$ 113a, einen parallel geschalteten Kondensator $C_Z$ 113b sowie einen Vorschaltwiderstand $R_Z$ 113c. Der Vorschaltwiderstand dient dazu, um die eine Spannungsabfalleinrichtung bildende Parallelschaltung des Kondensators 113b und der Diode 113a über den ersten Eingangsknoten 110 mit Strom zu versorgen, wie es später noch dargelegt wird.

Fig. 2b zeigt Alternativen für den Vorwiderstand, um den Spannungsabfall vor der Zenerdiode zu erzeugen. Insbesondere kann statt des Vorwiderstands eine Stromquelle, für die zwei Alternativen in der Mitte und rechts in Fig. 2b gezeigt sind, oder irgend eine andere Bias-Quelle verwendet werden.

Für die Betriebsweise des in Fig. 2a gezeigten Schaltreglers bzw. überhaupt von Schaltreglern sind die transienten Charakteristika der Speicherelemente Spule L und Kondensator $C_s$ wichtig, da der Schaltregler, wie er in Fig. 2a gezeigt ist, eine Regelung der Ausgangsspannung durch ständiges Ein/Aus-Schalten des Ladeschalters 106 erreicht.

Eine Spule ist dadurch charakterisiert, dass die Spannung, die über der Spule abfällt, gleich der zeitlichen Ableitung des Stroms ist, der durch die Spule fließt. Entsprechend ist ein Kondensator dadurch gekennzeichnet, dass der Strom, der durch den Kondensator fließt, proportional zur zeitlichen Ableitung der an dem Kondensator liegenden Spannung ist.

Bezüglich der Spule ist ferner von großer Bedeutung, dass die an der Spule anliegende Spannung springen kann, dass jedoch der Strom durch die Spule nicht springen kann. Wird daher eine Spule eingeschaltet, also wird eine Gleichspannung (über einen Quelleninnenwiderstand) an die Spule angelegt, so steigt die Spannung an der Spule schlagartig auf den Wert der angelegten Gleichspannung an und fällt dann exponentiell ab. Gleichzeitig beginnt der Strom durch die Spule von seinem Ursprungswert 0 an langsam anzusteigen, bis er dann irgendwann einen Wert erreicht hat, der gleich dem Quotienten aus der angelegten Spannung und dem Innenwiderstand der Quelle ist. Wenn dieser stationäre Zeitpunkt erreicht ist, ist auch die über der Spule abfallende Spannung zu 0 geworden.

Entsprechend umgekehrt ist es beim Kondensator. Wird der Kondensator eingeschaltet, so steigt die Spannung an dem Kondensator langsam an, während der Strom durch den Kondensator springen kann.

Die Elemente Spule und Kondensator unterscheiden sich somit dadurch, dass der Strom durch den Kondensator springen kann, während die Spannung an der Spule springen kann. Die Spannung an dem Kondensator kann dagegen nicht springen. Dasselbe gilt auch für den Strom durch die Spule, er kann ebenfalls nicht springen. Dies führt dazu, da zum Zeitpunkt des Einschaltens, also zum Zeitpunkt t = 0, wenn beim Zeitpunkt t = 0 das Einschalten stattfindet, die Spule als Leerlauf wirkt, während der Kondensator als Kurzschluß wirkt.

Nachfolgend wird auf das Ausschalten der Elemente Bezug genommen. Wird ein auf eine Gleichspannung aufgeladener Kondensator von der Gleichspannungsquelle abgetrennt, so passiert nichts. Er hält die Ladung, wenn er sich nicht über einen Widerstand entladen kann. Findet das Ausschalten des Kondensators jedoch über einen Kurzschluß statt, so führt dies dazu, dass ein sehr hoher Strom fließt, wobei zu diesem Zeitpunkt der Strom- und der Spannungs-Pfeil an dem Kondensator in entgegengesetzte Richtung zeigen. Der Kondensator arbeitet also, wenn er ausgeschaltet wird, als Generator.

Wird eine von einem Strom durchflossene Spule ausgeschaltet, so ist wieder von Bedeutung, wie die Spule ausgeschaltet wird. Wird eine Spule von einem Strom durchflossen, so existiert ein Magnetfeld, in dem Energie gespeichert wird. Wird eine Spule von der Quelle dadurch abgetrennt, dass zwischen Quelle und Spule ein Leerlauf ist, so würde der Strom durch die Spule eigentlich schlagartig auf 0 gebracht. Die in dem Magnetfeld der Spule gespeicherte Energie muss jedoch abfließen können. Daher führt ein Abschalten einer Spule durch Erzeugen eines Leerlaufs zwischen der Quelle und der Spule zu einer hohen Spannungsspitze, die dazu führt, dass sich an dem Schalter ein Lichtbogen bildet, über den die im Magnetfeld gespeicherte Energie zur Quelle abfließen kann. Aus diesem Grund wird eine Spule, um die theoretisch unendlich hohen Spannungsspitzen, die zerstörerisch wirken würden, zu vermeiden, über einen Widerstand, eine Diode oder einen Kondensator entladen. Dies führt zu einer Spannungsspitze mit reduzierter Höhe. Wird eine Spule ausgeschaltet, so zeigen wieder der Spannungs-pfeil und der Strompfeil in unterschiedliche Richtungen. Die Spule arbeitet somit als Generator.

Ist, wie es in Fig. 2a (oder Fig. 3a) gezeigt ist, die Spule in Serie zu einem Kondensator geschaltet, so ist zum Einschaltzeitpunkt, also wenn eine Spannung von 0 in eine Spannung mit einem bestimmten Gleichspannungswert umgeändert wird, der Kondensator ein Kurzschluß und die Spule ein Leerlauf. Somit liegt die gesamte eingeschaltete Spannung zunächst an der Spule an und sinkt dann mit zunehmendem Strom durch den Serienschwingkreis aus Spule und Kondensator ab. Zum Zeitpunkt des Ausschaltens einer Spannung an der Spule erzeugt die Spule noch einen Strom, der noch eine gewisse Zeit lang fließt, bis die in der Spule gespeicherte Energie (bzw. die in den Kondensator gespeicherte Energie) abgeflossen ist.

Die Funktionalität des Schaltreglers im stationären Zustand wird nachfolgend Bezug nehmend auf Fig. 2 beschrieben. Zum Zeitpunkt, zu dem der Schalter 106 geschlossen wird, liegt die volle Spannung $U_{G1}$ 10, 12 an der Diode 104 an. Über den Schalter 106 und die Spule 100 fließt ein Strom, der den Kondensator 102 lädt. Das Potential der positiven Ausgangsschiene 114 steigt somit relativ zur negativen Schiene an.

Im Mittel ist der Strom durch die Spule 100 gleich dem Strom, der an die Last, die zwischen die positive Ausgangsschiene 114 und die negative Ausgangsschiene 116 angeschaltet ist, abgegeben wird.

Zum Einschaltzeitpunkt wird der Knoten 118 auf das Potential des Knotens 110 gezogen. An der Diode 104 liegt folglich die volle Eingangsspannung $U_{GL}$. Da die Spannung $U_{SR}$ über die Kapazität $C_s$ nicht springen kann, wohl aber die Spannung über der Spule L, wird der Knoten 116 ebenfalls mit hoch gezogen, so dass die Spannung $U_{SR}$ konstant bleibt. An der Drossel L liegt in der Folge die Spannung $U_{GL} - U_{SR}$ an, so dass der Strom durch die Drossel entsprechend der Gleichung $dI_L/dt = (U_{GL} - U_{SR})/L$ zunimmt. Hierbei wurde der Spannungsabfall an Rsh vernachlässigt. Hierbei wurde der Spannungsabfall an Rsh vernachlässigt. Da nach dem Abschalten des Schalters 106 der Strom der Drossel nicht mehr durch die Quelle $U_{GL}$ und den Schalter 106 fließen kann, und die Drossel einen Sprung ihres Stromes verhindert, muss dieser Strom über die Freilaufdiode 104 weiterfließen. Dies führt jedoch dazu, dass das Potential des Knotens 118 entsprechend der Kenlinie dieser Diode auf ein Potential springt, da etwa 0,7 V unter dem Potential des Knotens 112 liegt. Der Kondensator $C_s$ verhindert wiederum einen Sprung der Spannung $U_{SR}$. Somit springt das Potential des Knotens 116 zum Ausschaltzeitpunkt auf - (0,7 V + $U_{SR}$). Folglich liegt an der Drossel (Knoten 103 - Knoten 112) eine negative Spannung an, so dass der Strom durch die Drossel 100 entsprechend der Gleichung $dI_L/dt = -(U_{SR} + 0,7$ V)/L abnimmt.

Nachdem - in anderen Worten ausgedrückt - zum Zeitpunkt des Einschaltens des Schalters 106 die volle Spannung an der Diode 104 liegt, und nachdem, wie es vorstehend ausgeführt worden ist, die Spannung an dem Kondensator nicht springen kann, jedoch an der Spule springen kann, wird gleichzeitig zum Einschaltzeitpunkt auch das Potential der positiven und der negativen Ausgangsschiene 116 angehoben.

Solange der Schalter aus ist, speist die Drossel über die Freilaufdiode den Kondensator. Solange der Drosselstrom größer ist als der Laststrom steigt die Spannung am Kondensator. Je mehr Energie nun von der Drossel auf den Kondensator übergeht, desto kleiner wird der Drosselstrom. Irgendwann wird der Drosselstrom kleiner als der Laststrom und ab diesem Zeitpunkt sinkt die Spannung am Kondensator.

Um ein zu weites Absinken der Spannung zu vermeiden, muss der Schalter wieder eingeschaltet werden., so dass der Drosselstrom wieder ansteigt. Allerdings ist der Drosselstrom zum Zeitpunkt des Einschaltens immer noch geringer als der Laststrom, so dass die Spannung am Kondensator zunächst weiter abnimmt. Bei leitendem Schalter nimmt der Drosselstrom nun jedoch wieder zu und wird irgendwann wieder größer als der Laststrom. Ab diesem Zeitpunkt nimmt die Spannung am Kondensator wieder zu. Wird nun der Strom durch die Drossel zu groß, dann wird der Schalter wieder gesperrt, und der Strom durch die Drossel wird wieder geringer. Der Zyklus beginnt nun wieder von vorne.

Dadurch liegt an der Drossel 100 die volle Eingangsspannung an, wodurch ein Strom anfängt durch die Drossel 100 zu fließen, der somit auch den Kondensator 102 lädt. Ist die resultierende Spannung am Kondensator 102 hoch genug, dann wird die Steuerung 111 den Umschalter 109 betätigen, derart, dass er nicht mehr mit der positiven Ausgangsschiene 114 sondern mit der negativen Ausgangsschiene 116 verbunden ist. Dies führt dazu, dass der Transistor 106 sperrt, und dass kein Strom mehr von der Quelle 10, 12 in das Netzwerk aus Spule, Diode und Kondensator fließt. Dies führt dazu, dass die Spule als Generator wirkt, dahingehend, dass das Potential am Knoten 103 abfällt und die Spule einen Strom abgibt, der über die Diode 104 den Kondensator 102 weiter lädt, so dass nach dem Ausschalten des Schalters die Spannung $U_{SR}$ noch etwas weiter ansteigt. Dieser Anstieg wird durch den Strom, der über die Last fließt, gebremst und wird dann, wenn der durch die Last gezogene Strom kleiner wird als der Strom, den die Spule 100 an den Knoten 114 liefert, zu einem Spannungsabfall. Dieser Spannungsabfall wird immer größer, da die Spule irgendwann nicht mehr genug Strom nachliefert. Bevor die Spannung zu klein wird, greift die Steuerung wieder ein und verbindet den Umschalter 109 wieder mit der positiven Ausgangsschiene, was dazu führt, dass der Schalter 106 wieder geschlossen wird und Strom liefert. Aufgrund der vorstehend ausgeführten Zusammenhänge nimmt die Ausgangsspannung $U_{SR}$ nach dem Einschalten noch etwas weiter ab, bis der positive Knoten 114 des Kondensators "nachgezogen" hat und die Spannung $U_{SR}$ wieder ansteigt. Irgendwann wird die Steuerung wieder den Umschalter 109 betätigen, dass er mit der negativen Ausgangsschiene 116 verbunden ist, so dass der Transistor 107 gesperrt wird, was wiederum dazu führt, dass die Spannung noch etwas weiter ansteigt, und zwar aufgrund der in der Spule (und dem Kondensator) gespeicherten Energie, die zu einem Strom über die Diode 104 und in den positiven Knoten 114 führt.

Der in Fig. 2a gezeigte Schalter 106 ist bei diesem Ausführungsbeispiel als selbstsperrender NMOS-Transistor ausgeführt. NMOS-Transistoren leiten dann, wenn die Spannung zwischen dem Gate, also dem Steueranschluß 107 und der Source größer als eine eventuell vorhandene Schwellenspannung ist. NMOS-Transistoren, die selbstleitend sind, leiten bereits bei einer Spannung $U_{GS}$ > 0. Bei dem in Fig. 2a gezeigten selbstsperrenden NMOS-Transistor muss dagegen die Spannung zwischen dem Gate 107 und der Source (Knoten 118 in Fig. 2a) größer als das Negative des Betrags der Schwellenspannung $U_{th}$ des Transistors 106 sein. Aus diesem Grund umfasst die Kopplungseinrichtung 113 von Fig. 1 die in Fig. 2a gezeigten Elemente Vorschaltwiderstand 113c, Parallelkondensator 113b und Zener-Diode 113a.

Die Zener-Diode 113a ist derart konfiguriert, dass sie ab einer gewissen Durchbruchspannung, die fest konfiguriert ist, als Spannungsquelle wirkt, was anders ausgedrückt bedeutet, dass an der Parallelschaltung aus Kondensator 113b und Diode 113a immer die durch die Zener-Diode bestimmte Durchbruchspannung $U_z$ abfällt. Ist der Umschalter 109 mit der positiven Schiene 114 verbunden, so liegt die an der Zener-Diode abfallende Spannung $U_z$ direkt zwischen dem Gate und der Source des Transistors an. Der Steuereingang 107 des Transistors wird somit mit der positiven Ausgangsschiene über die Parallelschaltung aus Kondensator und Zener-Diode gekoppelt, dahingehend, dass der Transistor leitend wird.

Die einzige Randbedingung hierfür ist, dass die durch die Zener-Diode bestimmte Durchbruchspannung größer als die Schwellenspannung des Transistors ist. Diese Voraussetzung ist jedoch ohne weiteres zu erfüllen, da typischerweise Schwellenspannungen von Transistoren nicht besonders groß sind und Zener-Dioden mit verschiedenen definierten Durchbruchspannungen vorhanden sind. Ferner muss die Zener-Diode nur sehr lose auf den Transistor abgestimmt sein, da der Wert der Durchbruchspannung der Zener-Diode nur größer als die Schwellenspannung $U_{th}$ des Transistors sein muss.

Nachdem die Anforderungen an den Zusammenhang zwischen Schwellenspannung des Transistors und Durchbruchspannung der Diode jedoch sehr lose sind, können Abweichungen verfügbarer Transistoren in Kauf genommen werden, ohne dass eine Schaltung zum Ausschuss wird. Das erfindungsgemäße Konzept ist somit dahingehend besonders vorteilhaft, dass die Ausschussrate und damit die Kosten des Endprodukts gering gehalten werden können.

Stellt die Steuerung fest, dass der Schalter 105 wieder ausgeschaltet werden soll, so steuert sie den Wechselschalter 109 derart an, dass er mit der negativen Ausgangsschiene verbunden wird. Dies führt dazu, dass das Potential am Gate 107 des Transistors um $U_{SR}$ kleiner wird als im eingeschalteten Zustand. Dadurch wird der Transistor gesperrt.

Ein besonderer Vorteil der in Fig. 2a gezeigten erfindungsgemäßen Schaltung besteht darin, dass ein definiertes Anlaufen der Schaltung sichergestellt wird. Für das definierte Anlaufen ist es insbesondere zunächst gleichgültig, ob der Wechselschalter 109 zum Zeitpunkt des Einschaltens mit der positiven Ausgangsschiene 114 oder der negativen Ausgangsschiene 116 verbunden ist. Wenn der Umschalter 109 insbesondere als Multiplexer aus Transistoren oder als Inverter realisiert wird, ist es undefiniert, ob der Umschalter 109 mit der oberen Schiene 114 oder der unteren Schiene 116 verbunden ist, wenn davon ausgegangen wird, dass vor dem Einschalten die gesamte in Fig. 2a gezeigte Schaltung in spannungslosem Zustand war, dass also alle Potentiale in der Schaltung auf dem Wert 0 sind.

Von diesem Ausgangs-Zustand, bei dem alle Potentiale gleich 0 sind, wird nachfolgend ausgegangen, um einen Anlaufvorgang der Schaltung in Fig. 2a darzustellen. Nachdem alle Potentiale gleich 0 sind, ist auch das Potential zwischen dem Gate 107 und der Source 118 des Schalters gleich 0. Da der Transistor ein selbstsperrender Transistor ist, ist der Schalter zunächst gesperrt. Wird eine positive Spannung 10, 12 zwischen den ersten Eingangsknoten 110 und den zweiten Eingangsknoten 112, der typischerweise der Masseknoten sein wird, angelegt, so wird zunächst der Kondensator $C_Z$ 113b über den Vorwiderstand $R_Z$ aufgeladen, bis die Spannung an dem Kondensator $C_Z$ 113b und der dazu parallelen Z-Diode $D_Z$ die Schwellenspannung $U_{th}$ des Transistorschalters 106 erreicht. Hierfür ist es, wie es ausgeführt worden ist, unerheblich, ob der Umschalter 109 mit dem Knoten 114 oder dem Knoten 116 verbunden ist.

Ist der Umschalter 109 mit dem Knoten 114 verbunden, so fällt die Spannung $U_Z$ an dem Kondensator 113b ohnehin direkt zwischen dem Gate 107 und der Source 118 des Transistors ab.

Ist dagegen der Umschalter 109 mit der negativen Schiene 116 verbunden, so lädt sich der Kondensator 113b ebenfalls über den Vorwiderstand $R_Z$ auf. Das Potential am Knoten 118, das das Source-Potential des Transistors bestimmt, wird jedoch zunächst nicht aus seinem 0-Wert gebracht, da noch keine Ladung des Kondensators 102, durch die das Potential 118 angehoben werden könnte, stattfindet, da der Umschalter 109 mit der negativen Schiene 116 verbunden ist.

In beiden Fällen des Schalters 109 steigt somit die Gate-Source-Spannung von einem Wert von 0 zum Zeitpunkt des Einschaltens der Quelle 10, 12 durch Betätigen des Schalters 14 in Fig. 1 auf einen Wert an, der gleich der Schwellenspannung des Transistors ist. Sobald dies der Fall ist, wird die Drain-Source-Strecke dieses Schalters 106 leitfähig, und der Kondensator $C_S$ wird (unabhängig von der Stellung des Schalters 109) aufgeladen. Der Ladestrom für den Kondensator 102 ($C_S$) fließt gleichzeitig über die Spule 100 zur Masse 112. Dies führt unmittelbar dazu, dass die Ausgangsspannung $U_{SR}$ aufgrund der Zunahme des Potentials an der positiven Ausgangsschiene 114 gegenüber dem Potential an der negativen Ausgangsschiene 116 zunimmt. Dieser Aufladevorgang setzt sich fort, bis die Spannung am Kondensator $C_S$ die Spannung an der Z-Diode minus der Schwellenspannung des Schalters 106 erreicht.

Würde der Umschalter 109 mit der positiven Ausgangsschiene 114 verbunden sein, so würde der Ladevorgang immer weiter fortgesetzt, da der Transistor 106 geöffnet ist. Ist der Umschalter 109 dagegen mit der negativen Schiene 116 verbunden, so wird der Schalter dann wieder geschlossen, wenn das Potential zwischen Gate und Source gleich der Schwellenspannung ist. Wenn angenommen wird, dass das Potential an der Source gleich $U_{SR}$ ist, und wenn angenommen wird, dass das Potential am Gate des Transistors gleich dem Spannungsabfall an der Zener-Diode $U_Z$ ist, so ergibt sich ein Wert $U_{SR}$ am Ausgang des Schaltreglers, bei dem der Transistor wieder sperrt, als Differenz zwischen der Spannung an der Zener-Diode und der Schwellspannung. Würde nichts weiter unternommen, so würde der Transistor wieder schließen und die Ausgangsspannung würde auf $U_{SR} = U_Z - U_{th}$ verharren.

Durch Dimensionierung der Zener-Diode 113a ist dieser "Verharrungswert" der Ausgangsspannung $U_{SR}$ relativ frei wählbar. Bei einem bevorzugten Ausführungsbeispiel der Erfindung wird die Zener-Diode so dimensioniert, dass $U_{SR}$ so groß wird, (wenn im "ungünstigen Fall" der Wechselschalter 109 zum Hochfahren mit der negativen Schiene 116 verbunden ist), dass die Steuerung 111, die vorzugsweise von $U_{SR}$ versorgt wird, bereits arbeiten kann. Die Spannung $U_{SR}$ wird somit durch Dimensionierung der Zener-Diode (und der Schwellenspannung) so groß gemacht, dass bei Anliegen dieser Spannung an der Steuerung die Zustände an den Knoten in der Steuerung bereits definiert sind.

Die Steuerung wird daher einen Wert $U_{SR}$ erfassen und mit einem Grenzwert vergleichen. Sobald die Steuerung feststellt, dass $U_{SR}$ beim Hochfahren den vorbestimmten Zustand erreicht hat, ist die Steuerung 111 wirksam, um sicherzustellen, dass der Umschalter 109 mit der positiven Schiene 114 verbunden ist. War dies bereits beim Anlauf der Fall, so führt die Steuerung 111 hier keine Veränderung des Umschalters 109 durch. War dies jedoch nicht der Fall, also war zum Zeitpunkt des Hochfahrens der Umschalter 109, wie in Fig. 2a gezeigt, mit der negativen Schiene 116 verbunden, so wird die Steuerung den Umschalter 109 derart ansteuern, dass nunmehr nicht mehr die negative Schiene 116 an den Steueranschluß 107 gekoppelt ist, sondern dass die positive Schiene 114 an den Steuereingang 107 gekoppelt ist. Damit liegt an der Anode der Z-Diode das Potential der positiven Ausgangsschiene. Hierdurch steigt die Spannung an dem Sieb-Kondensator $C_S$ 102 aufgrund des durch den Ladeschalter 106 fließenden Ladestroms weiter an, bis eine gewünschte Ausgangsspannung an $C_S$ anliegt. Nun folgt die eigentliche Spannungsregelung, indem der Wechselschalter 109 durch die Steuerung 111 hin- und hergeschaltet wird, um den Schalter T ein- bzw. auszuschalten, und um dadurch die Ausgangsspannung $U_{SR}$ nach Spannungs- und Strom-Bedarf einer Last (in Fig. 2a nicht gezeigt) zu regeln.

Die in Fig. 2a gezeigte Schaltung ist somit insbesondere dahingehend vorteilhaft, dass sie definiert hochfährt, wobei es zum Zeitpunkt des Hochfahrens unerheblich ist, in welcher Stellung der Schalter 109 steht. Ferner wird es bevorzugt, die Steuerung 111 derart zu dimensionieren, dass sie bereits dann definiert arbeitet, wenn die Ausgangsspannung gleich der Zener-Dioden-Spannung $U_Z$ minus der Schwellenspannung des Transistors 107 ist. Damit kann ohne eigene Versorgung für die Steuerung 111 der Hochfahrvorgang definiert fortgesetzt werden. Dies führt insbesondere zu einer preisgünstigen Schaltung, da keine speziellen Hochfahr-Maßnahmen getroffen werden müssen, außer der Sicherstellung, dass der Wechselschalter 109 mit der positiven Schiene 114 verbunden ist. Nachdem keine speziellen Maßnahmen erforderlich sind und insbesondere Spannungsüberprüfungen im Hinblick auf die Steuerung 111 etc. durchgeführt werden müssen, findet der Hochfahrvorgang sehr schnell statt.

Des weiteren sei darauf hingewiesen, dass der Spannungsanstieg durch entsprechende Dimensionierung des Widerstands 113c und des Kondensators 113b sehr schnell dimensioniert werden kann. So wird es ohnehin bevorzugt, den Widerstand 113c relativ groß zu dimensionieren, damit die durch ihn erzeugte Verlustleistung nicht in erhebliche Größenordnungen kommt. Ferner wird es bevorzugt, den Kondensator $C_Z$, der ohnehin nur zur Stabilisierung der Zener-Diode 113a bzw. zu deren (kleiner) Sperrschichtkapazität dient, ebenfalls klein zu dimensionieren, damit er schnell auf die Spannung $U_Z$ aufgeladen wird. Das Hochfahren findet somit derart statt, dass keine Zeitkonstanten berücksichtigt werden müssten, die das Hochfahren des Schaltreglers deutlich abbremsen würden.

Fig. 3a zeigt ein alternatives Ausführungsbeispiel, das sich von Fig. 2a dahingehend unterscheidet, dass der Transistor T 106 nunmehr ein selbstleitender NMOS-Transistor ist, und dass die Kopplungseinrichtung 113 von Fig. 1, die in Fig. 2a durch die Elemente 113a, 113b, 113c realisiert war, in Fig. 3a durch eine einfache Kopplung 113d realisiert ist. Während in Fig. 2a das Potential an der ersten Ausgangsschiene oder der zweiten Ausgangsschiene über die Kopplungseinrichtung 113 mit einem Spannungsabfall beaufschlagt worden ist, wird in Fig. 3a das Potential an der ersten Ausgangsschiene 114 oder der zweiten Ausgangsschiene 116 durch eine einfache Verbindung unmittelbar mit dem Steueranschluß 107 des Schalters 106 gekoppelt. Der Transistor 106 ist als selbstleitender n-Kanal-MOS-FET oder n-Kanal-JFET ausgeführt. Die Beschaltung des Transistors, der den Ladeschalter 106 bildet, bezüglich Drain und Source ist identisch zu dem Fall von Fig. 2a.

Die Spannungsquelle bzw. Spannungsabfalleinrichtung aus der Z-Diode mit dem Vorwiderstand und dem parallelen Kondensator von Fig. 2a entfällt dagegen bei Fig. 3a, um eine unmittelbare Potentialkopplung von einer Ausgangsschiene an den Steueranschluß 107 und des Schalters zu erreichen. Vorzugsweise wird die Schwellen-Spannung des Transistors $U_{Th}$ so dimensioniert, dass sie gleich der Z-Spannung der Z-Diode minus der Schwellen-Spannung des selbstsperrenden MOS-FETs im ersten Fall ist, damit die Ausgangsspannung $U_{SR}$ im Hochfahrvorgang einen solchen Wert erreicht, durch den die Steuerung 111 bereits betreibbar ist, um zu einem bestimmten Zeitpunkt des Hochfahrvorgangs den Umschalter 109 derart ansteuern zu können, dass er definiert mit der positiven Schiene 114 verbunden ist.

Schwellenspannungen bei selbstleitenden NMOS-Transistoren oder N-JFET-Transistoren sind dahingehend definiert, dass sie eine negative Spannung zwischen Gate und Source des Transistors definieren, bei der der Transistor 106 gerade sperrt. Spannungen, die höher als die negative Schwellenspannung sind, führen dann dazu, dass der Transistor leitet, während Spannungen, die noch negativer als die Schwellenspannung sind, dazu führen, dass der Transistor sperrt.

Im nachfolgenden wird der Hochfahrvorgang der in Fig. 3a gezeigten Schaltung erläutert. Wieder wird davon ausgegangen, dass im Ausgangszustand alle Potentiale gleich 0 sind. Damit leitet der Schalter (er ist selbstleitend ausgeführt), was dazu führt, dass das Potential an der Ausgangsschiene 114 angehoben wird. Es sei darauf hingewiesen, dass zum Zeitpunkt des Einschaltens zunächst sowohl der Knoten 114 als auch der Knoten 116 auf das Gleichspannungspotential angehoben werden, dass jedoch die Potentialdifferenz zwischen den Knoten gleich 0 ist. Die beiden Knoten 114 und 116 werden schlagartig angehoben, da der Kondensator, wie es ausgeführt worden ist, zum Zeitpunkt des Einschaltens einer Gleichspannung als Kurzschluß wirkt. Erst dann, wenn Ladung auf den Knoten 114 über den Ladeschalter 106 geliefert wird, entsteht eine Potentialdifferenz zwischen dem Knoten 114 und dem Knoten 116, die dazu führt, dass die Ausgangsspannung $U_{SR}$ von 0 V auf Werte größer als 0 V ansteigt. Nach dem Einschalten der Spannung wird somit der Kondensator 102 über den Transistor, der selbstleitend ist, aufgeladen.

Würde der Wechselschalter 109, der wieder derart ausgeführt sein kann, dass sein Anfangszustand undefiniert ist, mit der positiven Schiene 114 verbunden sein, so würde der Ladevorgang immer weiter fortgesetzt werden, da Gate und Source des Transistors kurzgeschlossen sind, derart, dass $U_{GS}$ gleich 0 V ist, was beim selbstleitenden Transistor immer einen leitfähigen Zustand zwischen Drain und Source bedeutet. Würde dagegen der Umschalter 109 mit der negativen Schiene verbunden sein, so würde der Ladezustand irgendwann aufhören, da das Source-Potential, also das Potential der positiven Schiene 114 immer weiter zunimmt. Wenn das Source-Potential größer als die Schwellenspannung ist, wird der Transistor geschlossen und die Ausgangsspannung $U_{SR}$ steigt nicht mehr weiter an. Daher wird, wie es ausgeführt worden ist, die Schwellenspannung des Transistors 106 derart gewählt, dass eine dann am Ausgang anliegende Ausgangsspannung $U_{SR}$ bereits ausreichend hoch ist, um die Steuerung 111, die mit der Spannung $U_{SR}$ versorgt wird, definiert arbeiten zu lassen, damit dieselbe dann den Umschalter 109 von der negativen Schiene 116 trennt und mit der positiven Schiene 114 verbindet, damit der Transistor wieder geöffnet ist, so dass der Ladevorgang des Kondensators 102 weiter fortgesetzt werden kann, bis die Steuerung 111 in den normalen Betrieb übergeht und eine Schaltersteuerung aufgrund einer tatsächlichen gewünschten Ausgangsspannung $U_{SR}$ vornimmt.

Zusammenfassend ist der Hochfahrvorgang in Fig. 3a somit derart, dass zunächst der Schalter T leitet. Nach Anlegen einer positiven Eingangsspannung $U_{G1}$ an den Eingang der Schaltung wird der Kondensator 102 über den Schalter T und die Drossel L aufgeladen, bis die Spannung am Kondensator $C_S$ die Schwellenspannung des Schalters T erreicht (wenn der Umschalter 109 mit der negativen Schiene 116 verbunden war). Dann ist die Spannung am Ausgang der Schaltung $U_{SR}$ bereits so groß, dass ein kontrolliertes Arbeiten des Reglers gewährleistet ist. Dieser schaltet nun den Wechselschalter $s_W$ so, dass am Gateanschluß des Schalters die positive Schiene der Ausgangsspannung $U_{SR}$ anliegt. Dadurch steigt die Spannung an $C_S$ weiter an, bis die gewünschte Ausgangsspannung an $C_S$ anliegt. Nun folgt die eigentliche Spannungsregelung. Durch Umschalten des Wechselschalters $s_W$ durch die Regelschaltung 111 wird der Schalter T ein- und ausgeschaltet, wodurch die Ausgangsspannung $U_{SR}$ geregelt wird.

Bezüglich der Dimensionierung der Schwellenspannung des Transistors 106 im Fall von Fig. 3a bzw. der Schwellenspannung des Transistors 106 und der Zener-Diodenspannung $U_Z$ von Fig. 2a sei darauf hingewiesen, dass diese Wert so dimensioniert werden, dass die Steuerung 111 bei der automatisch ohne Eingriff in die Schaltung und bei vorausgesetzter Stellung des Wechselschalters 109 auf der negativen Schiene 116 erreichte maximale Ausgangsspannungswert $U_{SR}$, der sich ohne irgendeine Intervention von selbst ergibt, bereits so groß ist, dass die Steuerung mit $U_{SR}$ versorgt werden kann.

Wird die Steuerung 111 bzw. werden die Schwellenspannung bzw. die Schwellenspannung und die Zener-Diodenspannung derart dimensioniert, dass die Ausgangsspannung $U_{SR}$, die "automatisch" erreicht wird, bereits etwas höher ist als die Spannung, bei der die Steuerung 111 definiert arbeitet, so kann die Steuerung 111 auch derart ausgestaltet sein, um sofort, wenn sie definiert arbeiten kann, also wenn die Eingangsspannung ausreichend groß ist, den Umschalter 109 nach oben, also auf die positive Ausgangsschiene zu legen. So ist der Umschaltzeitpunkt nicht darauf begrenzt, dass immer die maximale automatisch erreichbare Ausgangsspannung vorliegen muss, um den Schalter umzuschalten. Statt dessen ist es erforderlich, dass irgendwann im Hochfahrvorgang sichergestellt wird, dass der Umschalter mit der positiven Ausgangsschiene 114 verbunden ist.

Würde dagegen eine Steuerung verwendet werden, die unabhängig von $U_{SR}$ arbeitet, so könnte von vornherein, also bereits z. B. zum Zeitpunkt des Einschaltens der Gleichspannung $U_{G1}$ sichergestellt werden, dass der Schalter 109 mit der positiven Schiene 114 verbunden ist. Aufgrund der Einfachheit der Schaltung wird es jedoch bevorzugt, dass die Steuerung 111 von der Ausgangsspannung $U_{SR}$ versorgt wird, wobei in diesem Fall bei der Dimensionierung des Transistors und gegebenenfalls der Diode eher an die Grenze gegangen wird, dahingehend, dass z. B. 90% der sich maximal einstellenden Ausgangsspannung $U_{SR}$ bis zum Umlegen des Wechselschalters 109 verwendet werden, damit auch die Anforderungen an die Steuerung möglichst gering werden, da typischerweise Schaltungen, die mit geringeren Spannungen bereits einsatzfähig sind, mit den sonstigen Spannungsniveaus der in Fig. 2a und 3a gezeigten Schaltungen eher nicht kompatibel sind, so dass eine möglichst hohe automatisch sich einstellende Ausgangsspannung $U_{SR}$ bevorzugt wird.

Bei den in den Fig. 2a und 3a gezeigten Ausführungsbeispielen wird die Spule nicht, wie in Fig. 4, mit der Kathode der Diode gekoppelt, sondern mit der Anode. Dies hat den Vorteil, dass dann, wenn der Umschalter 109 mit der positiven Schiene 114 verbunden ist, das Potential, das zwischen Gate und Source des Transistors erzeugt wird, nicht durch die transienten Charakteristika der Spule beeinträchtigt wird. Die Spule kann bei einem anderen Ausführungsbeispiel auch mit der Diode kathodenseitig gekoppelt sein, derart, dass dann die Umschalteinrichtung 109, wenn sie die positive Schiene mit dem Transistorgate 107 verbindet, gewissermaßen die Spule mit dem Gate des Transistors entweder direkt koppelt oder kurzschließt oder über eine Spannungsabfalleinrichtung indirekt koppelt.

Ein Anordnen der Spule anodenseitig zur Diode hat ferner den Vorteil, dass dann die Eingangsspannung der Schaltung nur durch die Spannungsfestigkeit der drei Elemente Schalter, Diode und Drossel begrenzt. Ferner versorgt sich der Schaltregler selbst und läuft definiert hoch. Das Springen des Gleichtaktpotentials der Ausgangsspannung zwischen der positiven und der negativen Schiene der Eingangsspannung je nach Zustand des Schalters T ist für die Last nicht von primärer Bedeutung, da sie von diesem Springen nichts merkt, da die Last lediglich die Potentialdifferenz zwischen der oberen Ausgangsschiene und der unteren Ausgangsschiene erfährt, jedoch nicht das "absolute" Potential der positiven Ausgangsschiene bzw. der negativen Ausgangsschiene für sich.

Wie es bereits ausgeführt worden ist, ist die Anlaufzeit selbst durch die Dimensionierung von $R_Z$ und $C_Z$, die Induktivität der Drossel L und die Kapazität des SiebKondensators $C_S$ definiert. Eine zusätzliche Anlauf-Verzögerung zur Sicherstellung der Spannungs-Versorgung des Reglers wird nicht benötigt.

Ferner sei darauf hingewiesen, dass durch das erfindungsgemäße Konzept der Eingangsspannungs-Bereich, der üblicherweise auf ein Eingangsspannungs-Verhältnis von $U_{E,max}/U_{E,min} \leq 5:1$ beschränkt ist, erfindungsgemäß auf mindestens 50:1 erhöhbar ist, so lange die Spannungsfestigkeit der Diode, der Spule und des Schalters entsprechend mitgeführt wird, da diese Elemente durch die Eingangsspannung beaufschlagt werden. Dagegen werden weder der Kondensator noch der Umschalter noch die Steuerung mit derart hohen Spannungen beaufschlagt, so dass für diese Elemente die maximale Eingangsspannung nicht berücksichtigt werden muss, was wiederum zu einem preisgünstigeren und gleichzeitig flexibleren Schaltreglerkonzept gemäß der vorliegenden Erfindung führt.

**Patentansprüche**

1.    Schaltregler zum Erzeugen einer geregelten Ausgangsspannung, mit folgenden Merkmalen:

  einer ersten Ausgangsschiene (114);
  einer zweiten Ausgangsschiene (116), wobei eine Ausgangsschiene auf ein negatives Potential und die andere Ausgangsschiene auf ein positives Potential bringbar sind;
  einer Diode (104); die mit einer Ausgangsschiene (114, 116) verbunden ist;
  einem Ladeschalter (106), der in Serie zu der Diode (104) geschaltet ist, wobei der Ladeschalter einen Steuereingang (107) aufweist, durch den der Ladeschalter geöffnet oder geschlossen werden kann;
  einem Kondensator (102), wobei an dem Kondensator die geregelte Ausgangsspannung ($U_{SR}$) abgreifbar ist;
  einer Induktivität (100), die mit der Diode (104) gekoppelt ist; und
  einer Steuerung (111) zum Liefern eines Umschaltsteuersignals, um den Ladeschalter (106) zu schließen, damit der Kondensator (102) geladen wird, und um den Ladeschalter zu öffnen, damit der Kondensator entleden wird, so dass die Ausgangsspannung ($U_{SR}$) regelbar ist;

  **gekennzeichnet durch**:
  einer Umschalteinrichtung (109), die steuerbar ist, um abhängig von dem Umschaltsteuersignal die erste Ausgangsschiene oder die zweite Ausgangsschiene mit dem Steuereingang (107) des Ladeschalters zu Koppeln, wobei der Ladeschalter ausgebildet ist, um aufgrund eines Potentials an einer Ausgangsschiene geschlossen zu sein, und aufgrund eines Potentials an der anderen Ausgangsschiene geöffnet zu sein.

2.    Schaltregler nach Anspruch 1, bei dem der Ladeschalter (106) als Transistor ausgebildet ist, wobei ein Steuereingang des Transistors den Steuereingang des Ladeschalters darstellt.

3.    Schaltregler nach Anspruch 1 oder 2, bei dem der Ladeschalter als selbstleitender Transistor ausgebildet ist, der ab einer Schwellenspannung zwischen einem Gateanschluß und einem Sourceanschluß sperrbar ist, wobei die Schwellenspannung derart eingestellt ist, dass ein Potential einer der beiden Ausgangsschienen in einem Betriebszustand des Schaltreglers größer als die Schwellenspannung ist, um den Transistor leitend zu schalten, und dass ein Potential der anderen der beiden Ausgangsschienen kleiner als die Schwellenspannung ist, um den Transistor zu sperren.

4.    Schaltregler nach Anspruch 1 oder 2, bei dem der Transistor ein selbstsperrender Transistor mit einer Schwellenspannung ist, und bei dem die Umschalteinrichtung (109) eine Einrichtung (113) zum Erzeugen eines Spannungsabfalls aufweist, die einerseits mit dem Gateanschluß des selbstsperrenden Transistors gekoppelt ist, und die andererseits abhängig von dem Umschaltsteuersignal mit der ersten oder der zweiten Ausgangsschiene koppelbar ist,
  wobei die Einrichtung (113) zum Erzeugen eines Spannungsabfalls ($U_Z$) so dimensioniert ist, dass der Spannungsabfall betragsmäßig so viel größer als die Schwellenspannung ist, dass der Transistor leitend wird, wenn die Umschalteinrichtung mit einer Ausgangsschiene gekoppelt ist, und um den Transistor zu sperren, wenn die Umschalteinrichtung mit der anderen Ausgangsschiene gekoppelt ist.

5.    Schaltregler nach Anspruch 4, bei dem die Einrichtung (113) zum Erzeugen eines Spannungsabfalls eine Diode (113a) aufweist, deren Durchbruchspannung den Spannungsabfall ($U_Z$) definiert.

6.    Schaltregler nach Anspruch 5, bei dem die Diode (113a) eine Zener-Diode ist.

7.    Schaltregler nach Anspruch 5 oder 6, bei der der Diode ein Stabilisierungskondensator (113b) parallel geschaltet ist.

**8.** Schaltregler nach einem der Ansprüche 4 bis 7, bei dem die Einrichtung (113) zum Erzeugen eines Spannungsabfalls ($U_Z$) einen Vorwiderstand (113c) aufweist, der zwischen einem Drain-Anschluß des Transistors und dem Steuereingang des Transistors geschaltet ist, eine Stromquelle aus einem Transistor und einem Widerstand oder eine andere Biasquelle ist.

**9.** Schaltregler nach einem der vorhergehenden Ansprüche, bei dem eine Eingangsspannung zwischen einem Anschluß des Ladeschalters (110), der nicht mit der Diode verbunden ist, und einem Anschluß der Diode, der nicht mit dem Ladeschalter (106) verbunden ist, anlegbar ist.

**10.** Schaltregler nach einem der vorhergehenden Ansprüche,
bei dem eine Ausgangsschiene (116), die mit einer Kathode der Diode (104) verbunden ist, eine positive Ausgangsschiene ist,
bei dem eine Ausgangsschiene (116), die über die Induktivität (100) mit einer Anode der Diode (104) gekoppelt ist, eine negative Ausgangsschiene ist, so dass die Ausgangsspannung ($U_{SR}$) ein Gleichtaktpotential hat, das sich von einem Gleichtaktpotential einer Eingangsspannung (10, 12) unterscheidet.

**11.** Schaltregler nach Anspruch 10, bei dem die Induktivität (100) über einen Shunt-Widerstand (101) mit der negativen Ausgangsschiene (116) gekoppelt ist.

**12.** Schaltregler nach einem der vorhergehenden Ansprüche, bei dem die positive Ausgangsschiene ohmsch mit dem Anschluß des Ladeschalters gekoppelt ist, der mit der Diode (104) verbunden ist.

**13.** Schaltregler nach einem der vorhergehenden Ansprüche, bei dem die Steuerung (111) ausgebildet ist, um durch die Ausgangsspannung mit Spannung versorgt zu werden.

**14.** Schaltregler nach einem der vorhergehenden Ansprüche, bei dem die Steuerung (111) eine Anlaufsteuereinrichtung aufweist, die ausgebildet ist, um die Umschalteinrichtung (109) so anzusteuern, dass spätestens dann, wenn eine Spannung ($U_{SR}$) an dem Kondensator (102) einen vorbestimmten Wert erreicht, die Umschalteinrichtung (109) definiert angesteuert wird, um mit einer Ausgangsschiene (114, 116) verbunden zu werden.

**15.** Schaltregler nach Anspruch 14, bei dem die Umschalteinrichtung eine Einrichtung zum Erzeugen eines Spannungsabfalls ($U_Z$) aufweist,
bei dem die Steuerung (111) ausgebildet ist, um von der Ausgangsspannung versorgt zu werden,
bei der der Schalter (106) ein selbstsperrender Transistor mit einer Schwellenspannung ist, und
bei der der Spannungsabfall ($U_Z$) und die Schwellenspannung so dimensioniert sind, dass eine Differenz zwischen dem Spannungsabfall ($U_Z$) und der Schwellenspannung ($U_{th}$) ausreichend ist, damit die Steuerung (111) determiniert den Umschalter (109) betätigen kann.

**16.** Schaltregler nach Anspruch 1, bei dem die Umschalteinrichtung eine direkte Kopplung (113d) zwischen dem Umschalter (109) und dem Steueranschluß (107) des Ladeschalters umfasst,
bei dem der Ladeschalter (106) ein selbstleitender Transistor mit einer Schwellenspannung ist,
bei dem die Steuerung (111) durch die Ausgangsspannung ($U_{SR}$) versorgt wird, und
bei dem die Schwellenspannung des Transistors (106) so dimensioniert ist, dass die Steuerung bei einer Schwellenspannung des Transistors als Versorgungsspannung den Umschalter (109) definiert mit der Ausgangsschiene (114) verbinden kann, die mit einer Kathode der Diode (104) gekoppelt ist.

**17.** Schaltregler nach Anspruch 1, bei dem die Steuerung (111) ausgebildet ist, um durch die Ausgangsspannung ($U_{SR}$) versorgt zu werden, und bei dem die Steuerung (111) ausgebildet ist, um dann, wenn die Ausgangsspannung ($U_{SR}$) einen Pegel erreicht, bei dem die Steuerung (111) den Umschalter (109) determiniert ansteuern kann, den Umschalter (109) anzusteuern, damit der Steuereingang (107) des Ladeschalters (106) mit der Ausgangsschiene (114) gekoppelt ist, die mit einer Kathode der Diode (104) gekoppelt ist.

**18.** Verfahren zum Steuern eines Hochfahrens eines Schaltreglers mit einer ersten Ausgangsschiene (114); einer zweiten Ausgangsschiene (116), wobei eine Ausgangsschiene auf ein negatives Potential und die andere Ausgangsschiene auf ein positives Potential bringbar sind; einer Diode (104), die mit einer Ausgangsschiene (114, 116) verbunden ist; einem Ladeschalter (106), der in Serie zu der Diode (104) geschaltet ist, wobei der Ladeschalter einen Steuereingang (107) aufweist, durch den der Ladeschalter geöffnet oder geschlossen werden kann; einem Kondensator (102), wobei an dem Kondensator die geregelte Ausgangsspannung ($U_{SR}$) abgreifbar ist; einer Induktivität (100), die mit der Diode (104) gekoppelt ist; und einer Steuerung (111) zum Liefern eines Umschaltsteuersignals, um den Ladeschalter (106) zu schließen, damit der Kondensator (102) geladen wird, und um den Ladeschalter zu öffnen, damit der Kondensator zu entladen ist, mit folgenden Schritten:

Anlegen einer Gleichspannung (10, 12) zwischen eine Anode der Diode (104) und einen Anschluß (110) des Ladeschalters (106), der nicht mit einer Kathode der Diode (104) verbunden ist;
Versorgen der Steuerung (111) mit der Ausgangsspannung ($U_{SR}$) zwischen der ersten Ausgangsschiene (114) und der zweiten Ausgangsschiene (116);

**gekennzeichnet durch**:
Bereitstellen einer Umschalteinrichtung (109), die steuerbar ist, um abhängig von dem Umschaltsteuersignal die erste Ausgangsschiene oder die zweite Ausgangsschiene mit dem Steuereingang (107) des Ladeschalters zu koppeln, wobei der Ladeschalter ausgebildet ist, um aufgrund eines Potentials an einer Ausgangsschiene geschlossen zu sein, und aufgrund eines Potentials an der anderen Ausgangsschiene geöffnet zu sein; und
Ansteuern des Umschalters (109) **durch** die Steuerungseinrichtung (111), wenn die Ausgangsspannung ($U_{SR}$) einen Wert erreicht hat, bei dem die Steuerung (111) determiniert arbeiten kann, um den Umschalter (109) mit der Ausgangsschiene (114) zu verbinden, die mit der Kathode der Diode (104) gekoppelt ist.

**Claims**

1. Switching regulator for generating a regulated output voltage, comprising:

   a first output rail (114);
   a second output rail (116), wherein one output rail can be brought to a negative potential and the other output rail to a positive potential;
   a diode (104) connected to an output rail (114, 116);
   a charging switch (106) connected in series to the diode (104), wherein the charging switch has a control input (107) by which the charging switch can be opened or closed;
   a capacitor (102), wherein the regulated output voltage ($U_{SR}$) can be tapped at the capacitor;
   an inductance (100) coupled to the diode (104); and
   a control (111) for providing the change-over control signal to close the charging switch (106), so that the capacitor (102) is charged, and to open the charging switch, so that the capacitor is discharged, so that the output voltage ($U_{SR}$) can be regulated;

   **characterized by**:

   a change-over means (109) controllable to couple the first output rail or the second output rail to the control input (107) of the charging switch in dependence on the change-over control signal, wherein the charging switch is formed to be closed due to a potential at one output rail and to be opened due to a potential at the other output rail.

2. Switching regulator according to claim 1, wherein the charging switch (106) is formed as transistor, wherein a control input of the transistor represents the control input of the charging switch.

3. Switching regulator according to claim 1 or 2, wherein the charging switch is formed as normally-on transistor, which can be brought to a non-conductive state starting from a threshold voltage between a gate terminal and a source terminal, wherein the threshold voltage is set such that in an operating state of the switching regulator, a potential of one of the two output rails is higher than the threshold voltage to switch the transistor into a conductive state, and that a potential of the other of the two output rails is smaller than the threshold voltage to bring the transistor into a non-conductive state.

4. Switching regulator according to claim 1 or 2, wherein the transistor is a normally-off transistor with a threshold voltage, and wherein the change-over means (109) has a means (113) for generating a voltage drop, which is, on the one hand, coupled to the gate terminal of the normally-off transistor, and which can, on the other hand, be coupled to the first or second output rail depending on the change-over control signal, wherein the means (113) for generating a voltage drop ($U_Z$) is dimensioned such that the amount of the voltage drop is so much higher than the threshold voltage that the transistor becomes conductive when the change-over means is coupled to an output rail, and to bring the transistor into a non-conductive state when the change-over means is coupled to the other output rail.

5. Switching regulator according to claim 4, wherein the means (113) for generating a voltage drop has a diode (113a), whose breakdown voltage defines the voltage drop ($U_Z$).

6. Switching regulator according to claim 5, wherein the diode (113a) is a Zener diode.

7. Switching regulator according to claim 5 or 6, wherein a stabilizing capacitor (113b) is connected in parallel to the diode.

8. Switching regulator according to one of claims 4 to 7, wherein the means (113) for generating a voltage drop ($U_Z$) has a series resistor (113c), which is connected between a drain terminal of the transistor and the control input of the transistor, and which is a current source of a transistor and a resistor or another bias source.

9. The switching regulator according to one of the preceding claims, wherein an input voltage can be applied between a terminal of the charging switch (110), which is not connected to the diode, and a terminal of the diode, which is not connected to the charging switch (106).

10. Switching regulator according to one of the preceding claims,
wherein an output rail (116), which is connected to a cathode of the diode (104), is a positive output rail,
wherein an output rail (116), which is coupled to an anode of the diode (104) via the inductance (100), is a negative output rail, so that the output voltage ($U_{SR}$) has a common mode potential differing from a common mode potential of an input voltage (10, 12).

11. Switching regulator according to claim 10, wherein the inductance (100) is coupled to the negative output rail (116) via a shunt resistor (101).

12. Switching regulator according to one of the preceding claims, wherein the positive output rail is ohmically coupled to the terminal of the charging switch, which is connected to the diode (104).

13. Switching regulator according to one of the preceding claims, wherein the control (111) is formed to be supplied with voltage by the output voltage.

14. Switching regulator according to one of the preceding claims, wherein the control (111) has a startup control, which is formed to control the change-over means (109) such that, at the latest when a voltage ($U_{SR}$) at the capacitor (102) reaches a predetermined value, the change-over means (109) is controlled in a defined way to get connected to an output rail (114, 116).

15. Switching regulator according to claim 14, wherein the change-over means has a means for generating a voltage drop ($U_Z$),
wherein the control (111) is formed to be supplied by the output voltage,
wherein the switch (106) is a normally-off transistor with a threshold voltage, and
wherein the voltage drop ($U_z$) and the threshold voltage are dimensioned such that a difference between the voltage drop ($U_Z$) and the threshold voltage ($U_{th}$) is sufficient such that the control (111) can actuate the change-over switch (109) in a determined way.

16. Switching regulator according to claim 1, wherein the change-over means comprises a direct coupling (113d) between the change-over switch (109) and the control terminal (107) of the charging switch,
wherein the charging switch (106) is a normally-on transistor with a threshold voltage,
wherein the control (111) is supplied by the output voltage ($U_{SR}$), and
wherein the threshold voltage of the transistor (106) is dimensioned such that at a threshold voltage of the transistor as supply voltage, the control can connect the change-over switch (109) in a defined way to the output rail (114), which is coupled to a cathode of the diode (104).

17. Switching regulator according to claim 1, wherein the control (111) is formed to be supplied by the output voltage ($U_{SR}$), and wherein the control (111) is formed to control the change-over switch (109) when the output voltage ($U_{SR}$) reaches a level where the control (111) can control the change-over switch (109) in a determined way, such that the control input (107) of the charging switch (106) is coupled to the output rail (114), which is coupled to a cathode of the diode (104).

**18.** Method for controlling starting up of a switching regulator with a first output rail (114); a second output rail (116), wherein one output rail can be brought to a negative potential and the other output rail to a positive potential; a diode (104) connected to an output rail (114, 116) ; a charging switch (106) connected in series to the diode (104), wherein the charging switch has a control input (107) by which the charging switch can be opened or closed; a capacitor (102), wherein the regulated output voltage ($U_{SR}$) can be tapped at the capacitor; an inductance (100) coupled to the diode (104); and a control (111) for providing a change-over control signal to close the charging switch (106), so that the capacitor (102) is charged, and to open the charging switch, so that the capacitor is to be discharged, comprising the steps of:

applying a direct voltage (10, 12) between an anode of the diode (104) and a terminal (110) of the charging switch (106), which is not connected to a cathode of the diode (104);
supplying the control (111) with the output voltage ($U_{SR}$) between the first output rail (114) and the second output rail (116);

**characterized by**:

providing a change-over means (109) controllable to couple the first output rail or the second output rail to the control input (107) of the charging switch in dependence on the change-over control signal, wherein the charging switch is formed to be closed due to a potential at one output rail and to be opened due to a potential at the other output rail; and
controlling the change-over switch (109) by the control (111), when the output voltage ($U_{SR}$) has reached a value where the control (111) can operate in an determined way, to connect the change-over switch (109) to the output rail (114), which is coupled to the cathode of the diode (104).

**Revendications**

**1.** Régulateur à découpage destiné à générer une tension de sortie réglée, aux caractéristiques suivantes :

un premier rail de sortie (114) ;
un deuxième rail de sortie (116), un rail de sortie pouvant être amené à un potentiel négatif et l'autre rail de sortie pouvant être amené à un potentiel positif ;
une diode (104) qui est reliée à un rail de sortie (114, 116) ;
un commutateur de charge (106) qui est connecté en série avec la diode (104), le commutateur de charge présentant une entrée de commande (107) par laquelle le commutateur de charge peut être ouvert ou fermé ;
un condensateur (102), au condensateur pouvant être mesurée la tension de sortie ($U_{SR}$) ;
une inductance (100) qui est couplée à la diode (104) ; et
une commande (111) destinée à fournir un signal de commande de commutation, pour fermer le commutateur de charge (106) pour que le condensateur de charge (102) soit fermé, et pour ouvrir le commutateur de charge pour que le condensateur soit déchargé, de sorte que la tension de sortie ($U_{SR}$) soit réglable ;

**caractérisé par** :

un dispositif de commutation (109) qui peut être commandé pour coupler, en fonction du signal de commande de commutation, le premier rail de sortie ou le deuxième rail de sortie à l'entrée de commande (107) du commutateur de charge, le commutateur de charge étant réalisé de manière à être fermé par suite d'un potentiel à un rail de sortie, et à être ouvert par suite d'un potentiel à l'autre rail de sortie.

**2.** Régulateur à découpage selon la revendication 1, dans lequel le commutateur de charge (106) se présente sous forme de transistor, une entrée de commande du transistor représentant l'entrée de commande du commutateur de charge.

**3.** Régulateur à découpage selon la revendication 1 ou 2, dans lequel le commutateur de charge se présente sous forme de transistor qui peut être bloqué à partir d'une tension de seuil entre une connexion de porte et une connexion de source, la tension de seuil étant réglée de sorte qu'un potentiel de l'un des deux rails de sortie soit, dans un état de fonctionnement du régulateur à découpage, supérieur à la tension de seuil, pour rendre le transistor conducteur, et qu'un potentiel de l'autre des deux rails de sortie soit inférieur à la tension de seuil, pour bloquer le transistor.

4. Régulateur à découpage selon la revendication 1 ou 2, dans lequel le transistor est un transistor autobloquant avec une tension de seuil, et dans lequel le dispositif de commutation (109) présente un dispositif (113) destiné à générer une chute de tension qui, d'une part, est couplé à la connexion de porte du transistor autobloquant et, d'autre part, peut être couplé au deuxième rail de sortie, en fonction du signal de commande de commutation, le dispositif (113) destiné à générer une chute de tension ($U_z$) étant dimensionné de sorte que la chute de tension soit, en quantité, d'autant plus grande que la tension de seuil que le transistor devienne conducteur lorsque le dispositif de commutation est couplé à un rail de sortie et que le transistor soit bloqué lorsque le dispositif de commutation est couplé à l'autre rail de sortie.

5. Régulateur à découpage selon la revendication 4, dans lequel le dispositif (113) destiné à générer une chute de tension présente une diode (113a) dont la tension de rupture définit la chute de tension ($U_z$).

6. Régulateur à découpage selon la revendication 5, dans lequel la diode (113a) est une diode de Zener.

7. Régulateur à découpage selon la revendication 5 ou 6, dans lequel un condensateur de stabilisation (113b) est connecté en parallèle avec la diode.

8. Régulateur à découpage selon l'une des revendications 4 à 7, dans lequel le dispositif (113) destiné à générer une chute de tension ($U_z$) présente une résistance série (113c) qui est connectée entre une connexion de drain du transistor et l'entrée de commande du transistor, une source de courant qui est composée d'un transistor et d'une résistance ou une autre source de polarisation.

9. Régulateur à découpage selon l'une des revendications précédentes, dans lequel une tension d'entrée peut être appliquée entre une connexion du commutateur de charge (110) qui n'est pas reliée à la diode et une connexion de la diode qui n'est pas reliée au commutateur de charge (106).

10. Régulateur à découpage selon l'une des revendications précédentes, dans lequel un rail de sortie (116) qui est reliée à une cathode de la diode (104) est un rail de sortie positif, dans lequel un rail de sortie (116) qui est couplé, par l'intermédiaire de l'inductance (100), à une anode de la diode (104) est un rail de sortie négatif, de sorte que la tension de sortie ($U_{SR}$) ait un potentiel de mode commun qui est différent d'un potentiel de mode commun d'une tension d'entrée (10, 12).

11. Régulateur à découpage selon la revendication 10, dans lequel l'inductance (100) est couplée, par l'intermédiaire d'une résistance shunt (101), au rail de sortie négatif (116).

12. Régulateur à découpage selon l'une des revendications précédentes, dans lequel le rail de sortie positif est couplé ohmiquement avec la connexion du commutateur de charge qui est relié à la diode (104).

13. Régulateur à découpage selon l'une des revendications précédentes, dans lequel la commande (111) est réalisée de manière à être alimentée en tension par la tension de sortie.

14. Régulateur à découpage selon l'une des revendications précédentes, dans lequel la commande (111) présente un dispositif de commande d'amorce qui est réalisé de manière à activer le dispositif de commutation (109) de sorte que, au plus tard lorsqu'une tension ($U_{SR}$) au condensateur (102) atteint une valeur prédéterminée, le dispositif de commutation (109) soit activé de manière définie, pour être relié à un rail de sortie (114, 116).

15. Régulateur à découpage selon la revendication 14, dans lequel le dispositif de commutation présente un dispositif destiné à générer une chute de tension ($U_z$), dans lequel la commande (111) est réalisée de manière à être alimentée par la tension de sortie, dans lequel le commutateur (106) est un transistor autobloquant avec une tension de seuil, et dans lequel la chute de tension ($U_z$) et la tension de seuil sont dimensionnées de sorte qu'une différence entre la chute de tension ($U_z$) et la tension de seuil ($U_{th}$) soit suffisante pour que la commande (111) puisse actionner le commutateur (109) de manière déterminée.

16. Régulateur à découpage selon la revendication 1, dans lequel le dispositif de commutation comporte un couplage

17

direct (113d) entre le commutateur (109) et la connexion de commande (107) du commutateur de charge,
dans lequel le commutateur de charge (106) est un transistor autoconducteur avec une tension de seuil,
dans lequel la commande (111) est alimentée par la tension de sortie ($U_{SR}$), et
dans lequel la tension de seuil du transistor (106) est dimensionnée de sorte que la commande puisse, à une tension de seuil du transistor comme tension d'alimentation, relier le commutateur (109) de manière définie au rail de sortie (114) qui est couplé à une cathode de la diode (104).

17. Régulateur à découpage selon la revendication 1, dans lequel la commande (111) est réalisée de manière à être alimentée par la tension de sortie ($U_{SR}$), et dans lequel la commande (111) est réalisée de manière à activer le commutateur (109) lorsque la tension de sortie ($U_{SR}$) atteint un niveau auquel la commande (111) peut activer le commutateur (109) de manière déterminée, pour que l'entrée de commande (107) du commutateur de charge (106) soit couplée au rail de sortie (114) qui est couplé à une cathode de la diode (104).

18. Procédé pour commander une mise sous tension progressive d'un régulateur à découpage avec un premier rail de sortie (114) ; un deuxième rail de sortie (116), un rail de sortie pouvant être amené à un potentiel négatif et l'autre rail de sortie à un potentiel positif ; une diode (104) qui est reliée à un rail de sortie (114, 116) ; un commutateur de charge (106) qui est connecté en série avec la diode (104), le commutateur de charge présentant une entrée de commande (107) par laquelle le commutateur de charge peut être ouvert ou fermé ; un condensateur (102), au condensateur pouvant être mesurée la tension de sortie réglée ($U_{SR}$) ; une inductance (100) qui est couplée à la diode (104); et une commande (111) destinée à fournir un signal de commande de commutation, pour fermer le commutateur de charge (106), pour que le condensateur (102) soit chargé, et pour ouvrir le commutateur de charge, pour que le condensateur soit déchargé, aux étapes suivantes consistant à :

   appliquer une tension continue (10, 12) entre une anode de la diode (104) et une connexion (110) du commutateur de charge (106) qui n'est pas reliée à une cathode de la diode (104) ;
   alimenter la commande (111) par la tension de sortie ($U_{SR}$) entre le premier rail de sortie (114) et le deuxième rail de sortie (116) ;

   **caractérisé par** :

   prévoir un dispositif de commutation (109) qui peut être commandé pour coupler, en fonction du signal de commande de commutation, le premier rail de sortie ou le deuxième rail de sortie avec l'entrée de commande (107) du commutateur de charge, le commutateur de charge étant réalisé de manière à être fermé par suite d'un potentiel à un rail de sortie, et à être ouvert par suite d'un potentiel à l'autre rail de sortie ; et
   activer le commutateur (109) par le dispositif de commande (111) lorsque la tension de sortie ($U_{SR}$) a atteint une valeur à laquelle la commande (111) peut fonctionner de manière déterminée pour relier le commutateur (109) au rail de sortie (114) qui est couplé à la cathode de la diode (104).

FIG. 1

FIG. 2a

FIG. 2b

FIG. 3a

FIG. 3b

FIG. 4
(STAND DER TECHNIK)